# EUROPEAN PATENT SPECIFICATION

(11) **EP 4 020 203 B1**
(45) Date of publication and mention of the grant of the patent: **28.01.2026**
(21) Application number: 21197929.9
(22) Date of filing: 21.09.2021
(51) Int. Cl.: G06F 9/48, G06F 13/24

(54) **INTERRUPT AND EXCEPTION CLUSTERING IN A PROCESSOR USING EXTERNAL EVENT GROUPS**
INTERRUPT- UND EXCEPTION-CLUSTERING IN EINEM PROZESSOR UNTER VERWENDUNG VON EXTERNEN EREIGNISGRUPPEN
REGROUPEMENT D'INTERRUPTIONS ET D'EXCEPTIONS DANS UN PROCESSEUR À L'AIDE DE GROUPES D'ÉVÉNEMENTS EXTERNES

(30) Priority: 24.12.2020 US 202017133943
(43) Date of publication of application: 29.06.2022
(73) Proprietor: INTEL Corporation, Santa Clara, CA 95054 (US)
(72) Inventor: Yee, Oceager, Walnutport, 18088 (US)
(74) Representative: Goddar, Heinz J.

(56) References cited:
- EP-A1- 2 092 431
- WO-A1-2014/209395
- US-A1- 2019 163 251

## Description

### BACKGROUND

The present disclosure relates generally to interrupts and exceptions for processors (e.g., systems-on-chips (SoCs)). More particularly, the present disclosure relates to clustering interrupts and exceptions in the processors using external event groups.

Interrupts and exceptions may typically be sent to directly from an interrupt controller to processing cores for servicing. These interrupts and/or exceptions if sent directly to the processing cores when generated by the interrupt controller, the interrupts and/or exceptions may occur aperiodically. While in some processors such timing may be suitable, some processors, such as those used in cellular phone and/or consumer Internet-of-Things (IoT) applications, may place processing cores in a sleep state to improve processing efficiency and/or power utilization. However, interrupts and exceptions continuously waking up the processing cores to service individual interrupts may consume a relatively high amount of power.

Document US 2019 163 251 discloses an interrupt controller that detects a received interrupt and intentionally delays servicing of the interrupt depending on various conditions.

Document EP 2 092 431 discloses an interrupt controller that uses interrupt proximity timers to allow a temporal window in which any group of interrupts will be held off until the maximum allowable latency has been reached.

Document WO 2014 209 395 discloses an interrupt controller in which one or more interrupts are buffered based on a throughput estimation value and one or more parameters. The one or more interrupts are released in response to expiration of an interrupt coalescing time period.

This section is intended to introduce the reader to various aspects of art that may be related to various aspects of the present disclosure, which are described and/or claimed below. This discussion is believed to be helpful in providing the reader with background information to facilitate a better understanding of the various aspects of the present disclosure. Accordingly, it may be understood that these statements are to be read in this light, and not as admissions of prior art.

### BRIEF DESCRIPTION OF THE DRAWINGS

Various aspects of this disclosure may be better understood upon reading the following detailed description and upon reference to the drawings in which:
FIG. 1 is a block diagram of a register architecture, in accordance with an embodiment of the present disclosure;
FIG. 2A is a block diagram illustrating an in-order pipeline and a register renaming, out-of-order issue/execution pipeline, in accordance with an embodiment of the present disclosure;
FIG. 2B is a block diagram illustrating an in-order architecture core and a register renaming, out-of-order issue/execution architecture core to be included in a processor, in accordance with an embodiment of the present disclosure;
FIGS. 3A and 3B illustrate a block diagram of a more specific exemplary in-order core architecture, which core would be one of several logic blocks (including other cores of the same type and/or different types) in a chip, in accordance with an embodiment of the present disclosure;
FIG. 4 is a block diagram of a processor that may have more than one core, may have an integrated memory controller, and may have integrated graphics, in accordance with an embodiment of the present disclosure;
FIG. 5 shown a block diagram of a system, in accordance with an embodiment of the present disclosure;
FIG. 6 is a block diagram of a first more specific exemplary system, in accordance with an embodiment of the present disclosure;
FIG. 7 is a block diagram of a second more specific exemplary system, in accordance with an embodiment of the present disclosure;
FIG. 8 is a block diagram of a system on a chip (SoC), in accordance with an embodiment of the present disclosure;
FIG. 9 is a block diagram contrasting the use of a software instruction converter to convert binary instructions in a source instruction set to binary instructions in a target instruction set, in accordance with an embodiment of the present disclosure;
FIG. 10 is a block diagram of an interrupt system including an interrupt controller, in accordance with an embodiment of the present disclosure;
FIG. 11 is a flow diagram of a process for transmitting interrupts using the interrupt controller of FIG. 10, in accordance with an embodiment of the present disclosure;
FIG. 12 is a timing diagram of a process for clustering interrupts using a waken signal, in accordance with an embodiment of the present disclosure;
FIG. 13 is a timing diagram of a process for clustering interrupts using a periodic timer, in accordance with an embodiment of the present disclosure;
FIG. 14 is flow diagram of a process for clustering interrupts using membership groups, in accordance with an embodiment of the present disclosure;
FIG. 15 is a timing diagram of the process if the process of FIG. 14, in accordance with an embodiment of the present disclosure;
FIG. 16 is a schematic diagram of clustering circuitry configured to implement the process of FIG. 14, in accordance with an embodiment of the present disclosure;
FIG. 17 is timing diagram showing non-clustered interrupt schemes and clustered interrupt scheme context switching, in accordance with an embodiment of the present disclosure;
FIG. 18 is a flow diagram of a process for clustering interrupts using an external event group, in accordance with an embodiment of the present disclosure;
FIG. 19 is a timing diagram of the process of FIG. 18, in accordance with an embodiment of the present disclosure;
FIG. 20 is schematic diagram of clustering circuitry configured to implement the process of FIG. 18, in accordance with an embodiment of the present disclosure;
FIG. 21 is a flow diagram of a process for clustering interrupts using timing groups, in accordance with an embodiment of the present disclosure;
FIG. 22 is a timing diagram of the process of FIG. 21 for a timing group, in accordance with an embodiment of the present disclosure;
FIG. 23 is a timing diagram of the process of FIG. 21 showing two timing groups, in accordance with an embodiment of the present disclosure; and
FIG. 24 is a schematic diagram of clustering circuitry configured to implement the process of FIG. 21, in accordance with an embodiment of the present disclosure.

### DETAILED DESCRIPTION OF THE EMBODIMENTS

The claimed subject-matter is defined in the independent claims. Dependent claims define embodiments thereof. One or more specific embodiments will be described below. To provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," and "the" are intended to mean that there are one or more of the elements. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features.

### Register Architecture

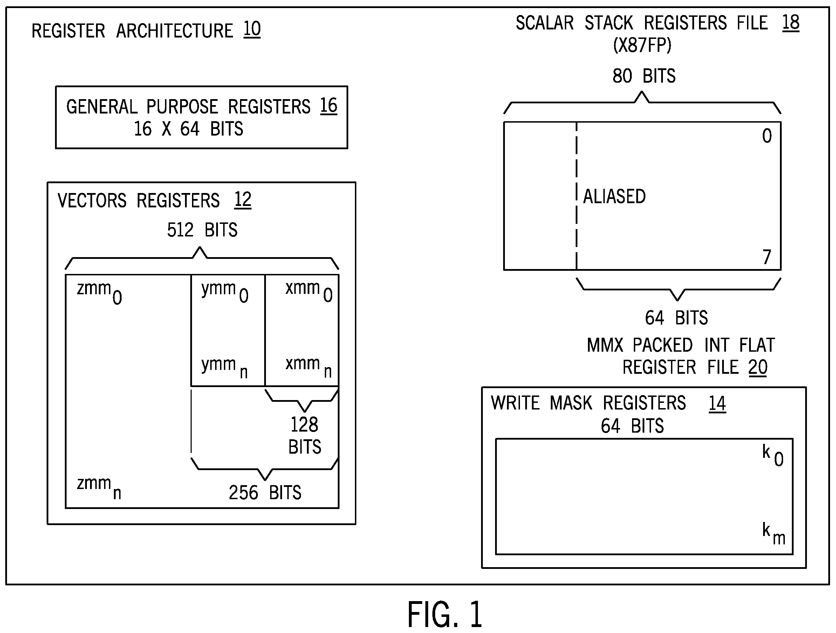

FIG. 1 is a block diagram of a register architecture 10, in accordance with an embodiment of the present disclosure. In the embodiment illustrated, there are a number (e.g., 32) of vector registers 12 that may be a number (e.g., 512) of bits wide. In the register architecture 10; these registers are referenced as zmm0 through zmmᵢ. The lower order (e.g., 256) bits of the lower n (e.g., 16) zmm registers are overlaid on corresponding registers ymm. The lower order (e.g., 128 bits) of the lower n zmm registers that are also the lower order n bits of the ymm registers are overlaid on corresponding registers xmm.

Write mask registers 14 may include m (e.g., 8) write mask registers (k0 through km), each having a number (e.g., 64) of bits. Additionally or alternatively, at least some of the write mask registers 14 may have a different size (e.g., 16 bits). At least some of the vector mask registers 12 (e.g., k0) are prohibited from being used as a write mask. When such vector mask registers are indicated, a hardwired write mask (e.g., 0xFFFF) is selected and, effectively disabling write masking for that instruction.

General-purpose registers 16 may include a number (e.g.,16) of registers having corresponding bit sizes (e.g., 64) that are used along with x86 addressing modes to address memory operands. These registers may be referenced by the names RAX, RBX, RCX, RDX, RBP, RSI, RDI, RSP, and R8 through R15. Parts (e.g., 32 bits of the registers) of at least some of these registers may be used for modes (e.g., 32-bit mode) that is shorter than the complete length of the registers.

Scalar floating-point stack register file (x87 stack) 18 has an MMX packed integer flat register file 20 is aliased. The x87 stack 18 is an eight-element (or other number of elements) stack used to perform scalar floating-point operations on floating point data using the x87 instruction set extension. The floating-point data may have various levels of precision (e.g., 16, 32, 64, 80, or more bits). The MMX packed integer flat register files 20 are used to perform operations on 64-bit packed integer data, as well as to hold operands for some operations performed between the MMX packed integer flat register files 20 and the XMM registers.

Alternative embodiments may use wider or narrower registers. Additionally, alternative embodiments may use more, less, or different register files and registers.

### Core Architectures, Processors, and Computer Architectures

Processor cores may be implemented in different ways, for different purposes, and in different processors. For instance, implementations of such cores may include: 1) a general purpose in-order core suitable for general-purpose computing; 2) a high performance general purpose out-of-order core suitable for general-purpose computing; 3) a special purpose core suitable for primarily for graphics and/or scientific (throughput) computing. Implementations of different processors may include: 1) a CPU including one or more general purpose in-order cores suitable for general-purpose computing and/or one or more general purpose out-of-order cores suitable for general-purpose computing; and 2) a coprocessor including one or more special purpose cores primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die the described CPU (sometimes referred to as the application core(s) or application processor(s)), the above described coprocessor, and additional functionality. Exemplary core architectures are described next, followed by descriptions of exemplary processors and computer architectures.

### In-Order and Out-of-Order Core Architecture

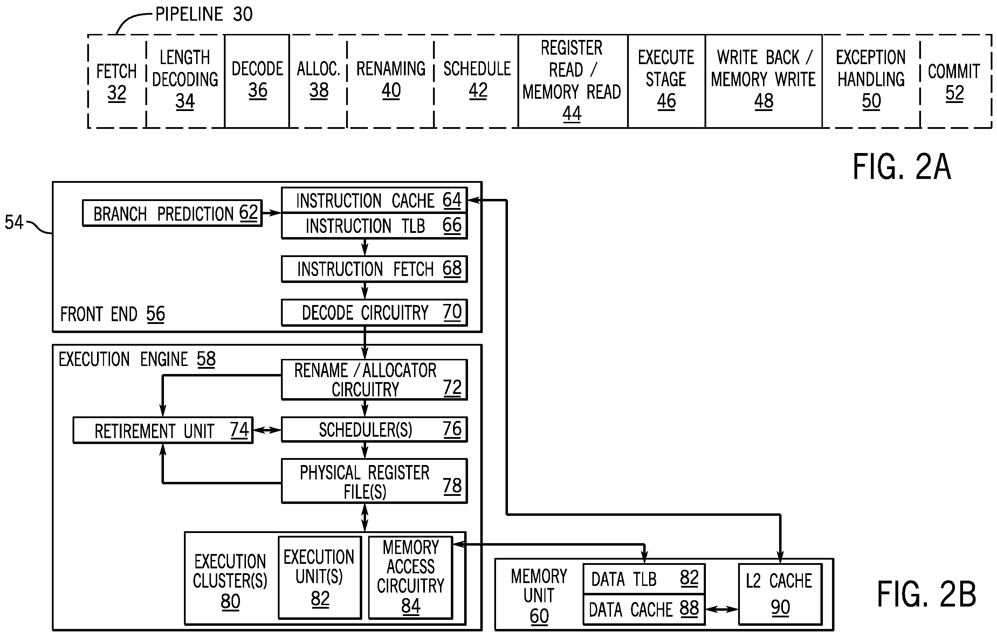

FIG. 2A is a block diagram illustrating an in-order pipeline and a register renaming, out-of-order issue/execution pipeline according to an embodiment of the disclosure. FIG. 2B is a block diagram illustrating both an embodiment of an in-order architecture core and an exemplary register renaming, out-of-order issue/execution architecture core to be included in a processor according to embodiments. The solid lined boxes in FIGS. 2A and 2B illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 2A, a pipeline 30 in the processor includes a fetch stage 32, a length decode stage 34, a decode stage 36, an allocation stage 38, a renaming stage 40, a scheduling (also known as a dispatch or issue) stage 42, a register read/memory read stage 44, an execute stage 46, a write back/memory write stage 48, an exception handling stage 50, and a commit stage 52.

FIG. 2B shows a processor core 54 including a front-end unit 56 coupled to an execution engine unit 58, and both are coupled to a memory unit 60. The processor core 54 may be a reduced instruction set computing (RISC) core, a complex instruction set computing (CISC) core, a very long instruction word (VLIW) core, or other core types. As yet another option, the processor core 54 may be a special-purpose core, such as, for example, a network or communication core, compression engine, coprocessor core, general purpose computing graphics processing unit (GPGPU) core, graphics core, or the like.

The front-end unit 56 includes a branch prediction unit 62 coupled to an instruction cache unit 64 that is coupled to an instruction translation lookaside buffer (TLB) 66. The TLB 66 is coupled to an instruction fetch unit 68. The instruction fetch unit 68 is coupled to a decode circuitry 70. The decode circuitry 70 (or decoder) may decode instructions and generate as an output one or more micro-operations, micro-code entry points, microinstructions, other instructions, or other control signals, which are decoded from, or which otherwise reflect, or are derived from, the original instructions. The decode circuitry 70 may be implemented using various different mechanisms. Examples of suitable mechanisms include, but are not limited to, look-up tables, hardware implementations, programmable logic arrays (PLAs), microcode read only memories (ROMs), etc. The processor core 54 may include a microcode ROM or other medium that stores microcode for macroinstructions (e.g., in decode circuitry 70 or otherwise within the front-end unit 56). The decode circuitry 70 is coupled to a rename/allocator unit 72 in the execution engine unit 58.

The execution engine unit 58 includes a rename/allocator unit 72 coupled to a retirement unit 74 and a set of one or more scheduler unit(s) 76. The scheduler unit(s) 76 represents any number of different schedulers, including reservations stations, central instruction window, etc. The scheduler unit(s) 76 is coupled to physical register file(s) unit(s) 78. Each of the physical register file(s) unit(s) 78 represents one or more physical register files storing one or more different data types, such as scalar integers, scalar floating points, packed integers, packed floating points, vector integers, vector floating points, statuses (e.g., an instruction pointer that is the address of the next instruction to be executed), etc. In one embodiment, the physical register file(s) unit(s) 78 includes the vector registers 12, the write mask registers 14, and/or the x87 stack 18. These register units may provide architectural vector registers, vector mask registers, and general-purpose registers. The physical register file(s) unit(s) 78 is overlapped by the retirement unit 74 to illustrate various ways in which register renaming and out-of-order execution may be implemented (e.g., using a reorder buffer(s) and a retirement register file(s); using a future file(s), a history buffer(s), and a retirement register file(s); using a register maps and a pool of registers; etc.).

The retirement unit 74 and the physical register file(s) unit(s) 78 are coupled to an execution cluster(s) 80. The execution cluster(s) 80 includes a set of one or more execution units 82 and a set of one or more memory access circuitries 84. The execution units 82 may perform various operations (e.g., shifts, addition, subtraction, multiplication) and on various types of data (e.g., scalar floating point, packed integer, packed floating point, vector integer, vector floating point). While some embodiments may include a number of execution units dedicated to specific functions or sets of functions, other embodiments may include only one execution unit or multiple execution units that all perform multiple different functions. The scheduler unit(s) 76, physical register file(s) unit(s) 78, and execution cluster(s) 80 are shown as being singular or plural because some processor cores 54 create separate pipelines for certain types of data/operations (e.g., a scalar integer pipeline, a scalar floating point/packed integer/packed floating point/vector integer/vector floating point pipeline, and/or a memory access pipeline that each have their own scheduler unit, physical register file(s) unit, and/or execution cluster. In the case of a separate memory access pipeline, a processor core 54 for the separate memory access pipeline is the only the execution cluster 80 that has the memory access circuitry 84). It should also be understood that where separate pipelines are used, one or more of these pipelines may be out-of-order issue/execution and the rest perform in-order execution.

The set of memory access circuitry 84 is coupled to the memory unit 60. The memory unit 60 includes a data TLB unit 86 coupled to a data cache unit 88 coupled to a level 2 (L2) cache unit 90. The memory access circuitry 84 may include a load unit, a store address unit, and a store data unit, each of which is coupled to the data TLB unit 86 in the memory unit 60. The instruction cache unit 64 is further coupled to the level 2 (L2) cache unit 90 in the memory unit 60. The L2 cache unit 90 is coupled to one or more other levels of caches and/or to a main memory.

By way of example, the register renaming, out-of-order issue/execution core architecture may implement the pipeline 30 as follows: 1) the instruction fetch unit 68 performs the fetch and length decoding stages 32 and 34 of the pipeline 30; 2) the decode circuitry 70 performs the decode stage 36 of the pipeline 30; 3) the rename/allocator unit 72 performs the allocation stage 38 and renaming stage 40 of the pipeline; 4) the scheduler unit(s) 76 performs the schedule stage 42 of the pipeline 30; 5) the physical register file(s) unit(s) 78 and the memory unit 60 perform the register read/memory read stage 44 of the pipeline 30; the execution cluster 80 performs the execute stage 46 of the pipeline 30; 6) the memory unit 60 and the physical register file(s) unit(s) 78 perform the write back/memory write stage 48 of the pipeline 30; 7) various units may be involved in the exception handling stage 50 of the pipeline; and/or 8) the retirement unit 74 and the physical register file(s) unit(s) 78 perform the commit stage 52 of the pipeline 30.

The processor core 54 may support one or more instructions sets, such as an x86 instruction set (with or without additional extensions for newer versions); a MIPS instruction set of MIPS Technologies of Sunnyvale, CA; an ARM instruction set (with optional additional extensions such as NEON) of ARM Holdings of Sunnyvale, CA). Additionally or alternatively, the processor core 54 includes logic to support a packed data instruction set extension (e.g., AVX1, AVX2), thereby allowing the operations used by multimedia applications to be performed using packed data.

It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof, such as a time-sliced fetching and decoding and simultaneous multithreading in INTEL^{®} Hyperthreading technology.

While register renaming is described in the context of out-of-order execution, register renaming may be used in an in-order architecture. While the illustrated embodiment of the processor also includes a separate instruction cache unit 64, a separate data cache unit 88, and a shared L2 cache unit 90, some processors may have a single internal cache for both instructions and data, such as, for example, a Level 1 (L1) internal cache, or multiple levels of the internal cache. In some embodiments, the processor may include a combination of an internal cache and an external cache that is external to the processor core 54 and/or the processor. Alternatively, some processors may use a cache that is external to the processor core 54 and/or the processor.

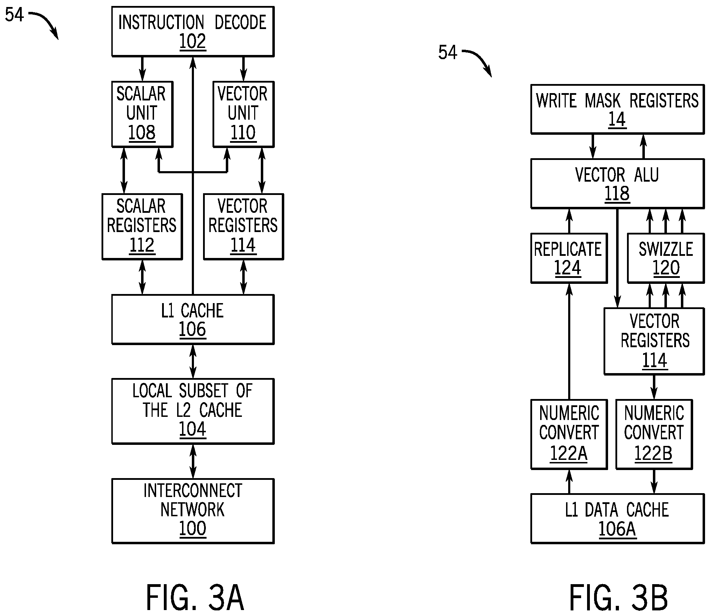

FIGS. 3A and 3B illustrate more detailed block diagrams of an in-order core architecture. The processor core 54 includes one or more logic blocks (including other cores of the same type and/or different types) in a chip. The logic blocks communicate through a high-bandwidth interconnect network (e.g., a ring network) with some fixed function logic, memory I/O interfaces, and other I/O logic, depending on the application.

FIG. 3A is a block diagram of a single processor core 54, along with its connection to an on-die interconnect network 100 and with its local subset of the Level 2 (L2) cache 104, according to embodiments of the disclosure. In one embodiment, an instruction decoder 102 supports the x86 instruction set with a packed data instruction set extension. An L1 cache 106 allows low-latency accesses to cache memory into the scalar and vector units. While in one embodiment (to simplify the design), a scalar unit 108 and a vector unit 110 use separate register sets (respectively, scalar registers 112 (e.g., x87 stack 18) and vector registers 114 (e.g., vector registers 12) and data transferred between them is written to memory and then read back in from a level 1 (L1) cache 106, alternative embodiments of the disclosure may use a different approach (e.g., use a single register set or include a communication path that allow data to be transferred between the two register files without being written and read back).

The local subset of the L2 cache 104 is part of a global L2 cache unit 90 that is divided into separate local subsets, one per processor core. Each processor core 54 has a direct access path to its own local subset of the L2 cache 104. Data read by a processor core 54 is stored in its L2 cache 104 subset and can be accessed quickly, in parallel with other processor cores 54 accessing their own local L2 cache subsets. Data written by a processor core 54 is stored in its own L2 cache 104 subset and is flushed from other subsets, if necessary. The interconnection network 100 ensures coherency for shared data. The interconnection network 100 is bi-directional to allow agents such as processor cores, L2 caches, and other logic blocks to communicate with each other within the chip. Each data-path may have a number (e.g.,1012) of bits in width per direction.

FIG. 3B is an expanded view of part of the processor core in FIG. 3A according to embodiments of the disclosure. FIG. 3B includes an L1 data cache 106A part of the L1 cache 106, as well as more detail regarding the vector unit 110 and the vector registers 114. Specifically, the vector unit 110 may be a vector processing unit (VPU) (e.g., a vector arithmetic logic unit (ALU) 118) that executes one or more of integer, single-precision float, and double-precision float instructions. The VPU supports swizzling the register inputs with swizzle unit 120, numeric conversion with numeric convert units 122A and 122B, and replication with replication unit 124 on the memory input. The write mask registers 14 allow predicating resulting vector writes.

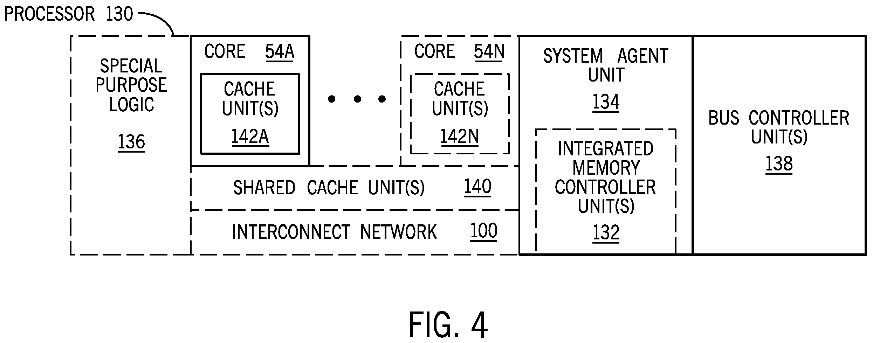

FIG. 4 is a block diagram of a processor 130 that may have more than one processor core 54, may have an integrated memory controller unit(s) 132, and may have integrated graphics according to embodiments of the disclosure. The solid lined boxes in FIG. 4 illustrate a processor 130 with a single core 54A, a system agent unit 134, a set of one or more bus controller unit(s) 138, while the optional addition of the dashed lined boxes illustrates the processor 130 with multiple cores 54A-N, a set of one or more integrated memory controller unit(s) 132 in the system agent unit 134, and a special purpose logic 136.

Thus, different implementations of the processor 130 may include: 1) a CPU with the special purpose logic 136 being integrated graphics and/or scientific (throughput) logic (which may include one or more cores), and the cores 54A-N being one or more general purpose cores (e.g., general purpose in-order cores, general purpose out-of-order cores, or a combination thereof); 2) a coprocessor with the cores 54A-N being a relatively large number of special purpose cores intended primarily for graphics and/or scientific (throughput); and 3) a coprocessor with the cores 54A-N being a relatively large number of general purpose in-order cores. Thus, the processor 130 may be a general-purpose processor, coprocessor or special-purpose processor, such as, for example, a network or communication processor, compression engine, graphics processor, GPGPU (general purpose graphics processing unit), a high-throughput many integrated core (MIC) coprocessor (including 30 or more cores), an embedded processor, or the like. The processor 130 may be implemented on one or more chips. The processor 130 may be a part of and/or may be implemented on one or more substrates using any of a number of process technologies, such as, for example, BiCMOS, CMOS, or NMOS.

The memory hierarchy includes one or more levels of cache within the cores, a set or one or more shared cache units 140, and external memory (not shown) coupled to the set of integrated memory controller unit(s) 132. The set of shared cache units 140 may include one or more mid-level caches, such as level 2 (L2), level 3 (L3), level 4 (L4), or other levels of cache, a last level cache (LLC), and/or combinations thereof. While a ring-based interconnect network 100 may interconnect the integrated graphics logic 136 (integrated graphics logic 136 is an example of and is also referred to herein as special purpose logic 136), the set of shared cache units 140, and/or the system agent unit 134/integrated memory controller unit(s) 132 may use any number of known techniques for interconnecting such units. For example, coherency may be maintained between one or more cache units 142A-N and cores 54A-N.

In some embodiments, one or more of the cores 54A-N are capable of multithreading. The system agent unit 134 includes those components coordinating and operating cores 54A-N. The system agent unit 134 may include, for example, a power control unit (PCU) and a display unit. The PCU may be or may include logic and components used to regulate the power state of the cores 54A-N and the integrated graphics logic 136. The display unit is used to drive one or more externally connected displays.

The cores 54A-N may be homogenous or heterogeneous in terms of architecture instruction set. That is, two or more of the cores 54A-N may be capable of execution of the same instruction set, while others may be capable of executing only a subset of a single instruction set or a different instruction set.

### Computer Architecture

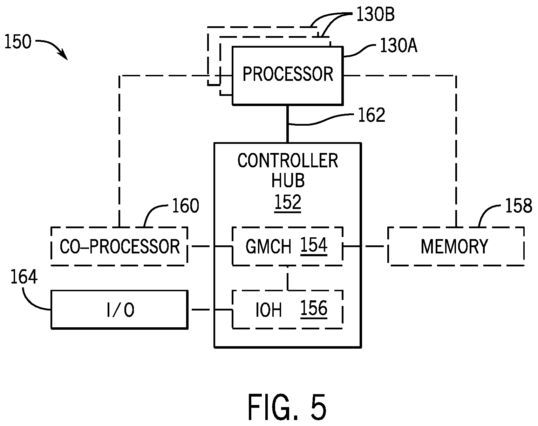

FIGS. 5-8 are block diagrams of embodiments of computer architectures. These architectures may be suitable for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices. In general, a wide variety of systems or electronic devices capable of incorporating the processor 130 and/or other execution logic.

Referring now to FIG. 5, shown is a block diagram of a system 150 in accordance with an embodiment of the present disclosure. The system 150 may include one or more processors 130A, 130B that is coupled to a controller hub 152. The controller hub 152 may include a graphics memory controller hub (GMCH) 154 and an Input/Output Hub (IOH) 156 (which may be on separate chips); the GMCH 154 includes memory and graphics controllers to which are coupled memory 158 and a coprocessor 160; the IOH 156 couples input/output (I/O) devices 164 to the GMCH 154. Alternatively, one or both of the memory and graphics controllers are integrated within the processor 130 (as described herein), the memory 158 and the coprocessor 160 are coupled to (e.g., directly to) the processor 130A, and the controller hub 152 in a single chip with the IOH 156.

The optional nature of an additional processor 130B is denoted in FIG. 5 with broken lines. Each processor 130A, 130B may include one or more of the processor cores 54 described herein and may be some version of the processor 130.

The memory 158 may be, for example, dynamic random-access memory (DRAM), phase change memory (PCM), or a combination thereof. For at least one embodiment, the controller hub 152 communicates with the processor(s) 130A, 130B via a multi-drop bus, such as a frontside bus (FSB), point-to-point interface such as QuickPath Interconnect (QPI), or similar connection 162.

In one embodiment, the coprocessor 160 is a special-purpose processor, such as, for example, a high-throughput MIC processor, a network or communication processor, a compression engine, a graphics processor, a GPGPU, an embedded processor, or the like. In an embodiment, the controller hub 152 may include an integrated graphics accelerator.

There can be a variety of differences between the physical resources of the processors 130A, 130B in terms of a spectrum of metrics of merit including architectural, microarchitectural, thermal, power consumption characteristics, and the like.

In some embodiments, the processor 130A executes instructions that control data processing operations of a general type. Embedded within the instructions may be coprocessor instructions. The processor 130A recognizes these coprocessor instructions as being of a type that should be executed by the attached coprocessor 160. Accordingly, the processor 130A issues these coprocessor instructions (or control signals representing coprocessor instructions) on a coprocessor bus or other interconnect, to the coprocessor 160. The coprocessor 160 accepts and executes the received coprocessor instructions.

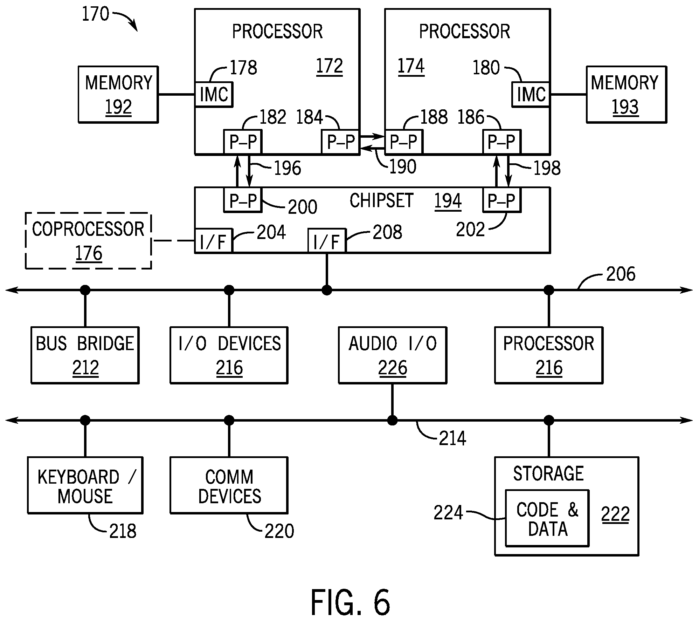

Referring now to FIG. 6, shown is a more detailed block diagram of a multiprocessor system 170 in accordance with an embodiment of the present disclosure. As shown in FIG. 6, the multiprocessor system 170 is a point-to-point interconnect system, and includes a processor 172 and a processor 174 coupled via a point-to-point interface 190. Each of processors 172 and 174 may be some version of the processor 130. In one embodiment of the disclosure, processors 172 and 174 are respectively processors 130A and 130B, while coprocessor 176 is coprocessor 160. In another embodiment, processors 172 and 174 are respectively processor 130A and coprocessor 160.

Processors 172 and 174 are shown including integrated memory controller (IMC) units 178 and 180, respectively. The processor 172 also includes point-to-point (P-P) interfaces 182 and 184 as part of its bus controller units. Similarly, the processor 174 includes P-P interfaces 186 and 188. The processors 172, 174 may exchange information via a point-to-point interface 190 using P-P interfaces 184, 188. As shown in FIG. 6, IMCs 178 and 180 couple the processors to respective memories, namely a memory 192 and a memory 193 that may be different portions of main memory locally attached to the respective processors 172, 174.

Processors 172, 174 may each exchange information with a chipset 194 via individual P-P interfaces 196, 198 using point-to-point interfaces 182, 200, 186, 202. Chipset 194 may optionally exchange information with the coprocessor 176 via a high-performance interface 204. In an embodiment, the coprocessor 176 is a special-purpose processor, such as, for example, a high-throughput MIC processor, a network or communication processor, a compression engine, a graphics processor, a GPGPU, an embedded processor, or the like.

A shared cache (not shown) may be included in either processor 172 or 174 or outside of both processors 172 or 174 that is connected with the processors 172, 174 via respective P-P interconnects such that either or both processors' local cache information may be stored in the shared cache if a respective processor is placed into a low power mode.

The chipset 194 may be coupled to a first bus 206 via an interface 208. In an embodiment, the first bus 206 may be a Peripheral Component Interconnect (PCI) bus or a bus such as a PCI Express bus or another third generation I/O interconnect bus, although the scope of the present disclosure is not so limited.

As shown in FIG. 6, various I/O devices 210 may be coupled to first bus 206, along with a bus bridge 212 that couples the first bus 206 to a second bus 214. In an embodiment, one or more additional processor(s) 216, such as coprocessors, high-throughput MIC processors, GPGPUs, accelerators (such as, e.g., graphics accelerators or digital signal processing (DSP) units), field programmable gate arrays, or any other processors, are coupled to the first bus 206. In an embodiment, the second bus 214 may be a low pin count (LPC) bus. Various devices may be coupled to the second bus 214 including, for example, a keyboard and/or mouse 218, communication devices 220 and a storage unit 222 such as a disk drive or other mass storage device which may include instructions/code and data 224, in an embodiment. Further, an audio I/O 226 may be coupled to the second bus 214. Note that other architectures may be deployed for the multiprocessor system 170. For example, instead of the point-to-point architecture of FIG. 6, the multiprocessor system 170 may implement a multi-drop bus or other such architectures.

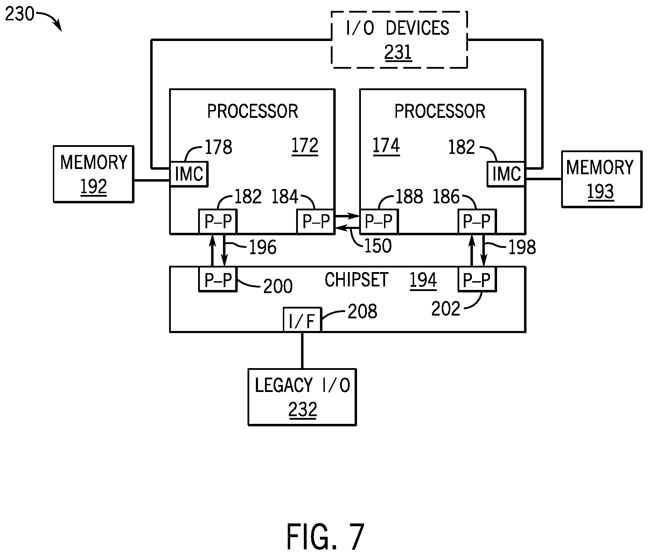

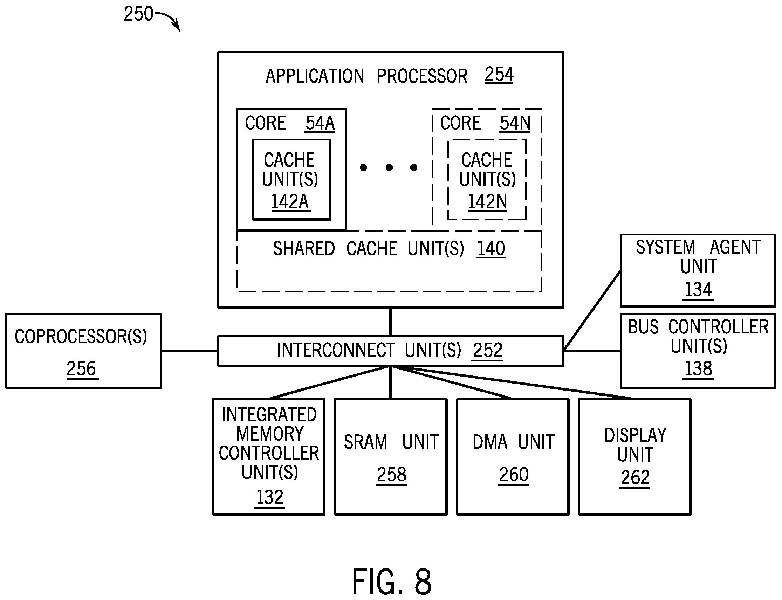

Referring now to FIG. 7, shown is a block diagram of a system 230 in accordance with an embodiment of the present disclosure. Like elements in FIGS. 7 and 8 contain like reference numerals, and certain aspects of FIG. 6 have been omitted from FIG. 7 to avoid obscuring other aspects of FIG. 7.

FIG. 7 illustrates that the processors 172, 174 may include integrated memory and I/O control logic ("IMC") 178 and 180, respectively. Thus, the IMC 178, 180 include integrated memory controller units and include I/O control logic. FIG. 7 illustrates that not only are the memories 192, 193 coupled to the IMC 178, 180, but also that I/O devices 231 are also coupled to the IMC 178, 180. Legacy I/O devices 232 are coupled to the chipset 194 via the interface 208.

Referring now to FIG. 8, shown is a block diagram of a SoC 250 in accordance with an embodiment of the present disclosure. Similar elements in FIG. 4 have like reference numerals. Also, dashed lined boxes are optional features included in some SoCs 250. In FIG. 8, an interconnect unit(s) 252 is coupled to: an application processor 254 that includes a set of one or more cores 54A-N that includes cache units 142A-N, and shared cache unit(s) 140; a system agent unit 134; a bus controller unit(s) 138; an integrated memory controller unit(s) 132; a set or one or more coprocessors 256 that may include integrated graphics logic, an image processor, an audio processor, and/or a video processor; a static random access memory (SRAM) unit 258; a direct memory access (DMA) unit 260; and a display unit 262 to couple to one or more external displays. In an embodiment, the coprocessor(s) 256 include a special-purpose processor, such as, for example, a network or communication processor, a compression engine, a GPGPU, a high-throughput MIC processor, an embedded processor, or the like.

Embodiments of the mechanisms disclosed herein may be implemented in hardware, software, firmware, or a combination of such implementation approaches. Embodiments of the disclosure may be implemented as computer programs and/or program code executing on programmable systems including at least one processor, a storage system (including volatile and non-volatile memory and/or storage elements), at least one input device, and at least one output device.

Program code, such as data 224 illustrated in FIG. 6, may be applied to input instructions to perform the functions described herein and generate output information. The output information may be applied to one or more output devices. For purposes of this application, a processing system includes any system that has a processor, such as, for example, a digital signal processor (DSP), a microcontroller, an application-specific integrated circuit (ASIC), or a microprocessor.

The program code may be implemented in a high-level procedural or object-oriented programming language to communicate with a processing system. The program code may also be implemented in an assembly language or in a machine language. In fact, the mechanisms described herein are not limited in scope to any particular programming language. In any case, the language may be a compiled language or an interpreted language.

One or more aspects of at least one embodiment may be implemented by representative instructions stored on a machine-readable medium that represents various logic within the processor that, when read by a machine causes the machine to fabricate logic to perform the techniques described herein. Such representations, known as "IP cores," may be stored on a tangible, machine readable medium and supplied to various customers or manufacturing facilities to load into the fabrication machines that make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic cards, optical cards, or any other type of media suitable for storing electronic instructions.

Accordingly, embodiments of the embodiment include non-transitory, tangible machine-readable media containing instructions or containing design data, such as designs in Hardware Description Language (HDL) that may define structures, circuits, apparatuses, processors and/or system features described herein. Such embodiments may also be referred to as program products.

### Emulation

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert instructions to one or more other instructions to be processed by the core. The instruction converter may be implemented in software, hardware, firmware, or a combination thereof. The instruction converter may be implemented on processor, off processor, or part on and part off processor.

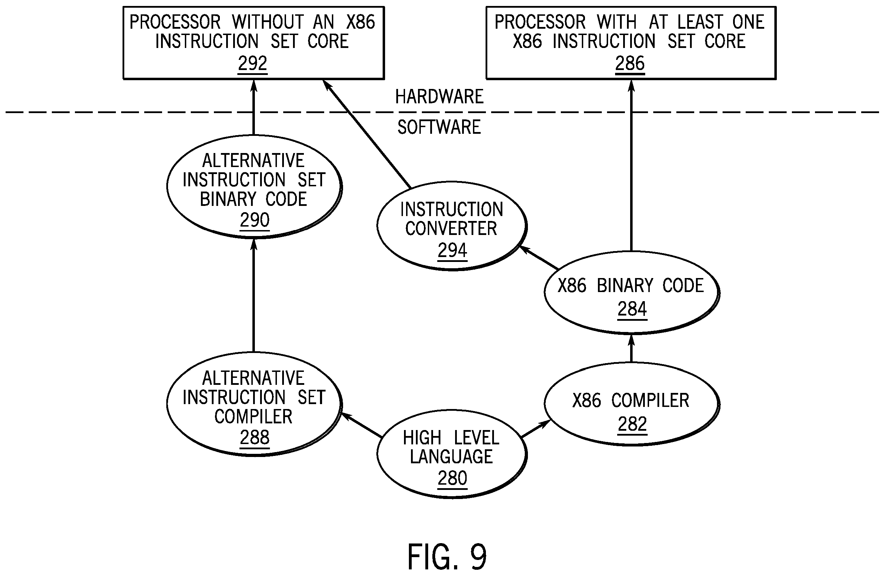

FIG. 9 is a block diagram contrasting the use of a software instruction converter to convert binary instructions in a source instruction set to binary instructions in a target instruction set according to embodiments of the disclosure. In the illustrated embodiment, the instruction converter is a software instruction converter, although alternatively the instruction converter may be implemented in software, firmware, hardware, or any combinations thereof. FIG. 9 shows a program in a high-level language 280 may be compiled using an x86 compiler 282 to generate x86 binary code 284 that may be natively executed by a processor with at least one x86 instruction set core 286. The processor with at least one x86 instruction set core 286 represents any processor that can perform substantially the same functions as an Intel processor with at least one x86 instruction set core by compatibly executing or otherwise processing (1) a substantial portion of the instruction set of the Intel x86 instruction set core or (2) object code versions of applications or other software targeted to run on an Intel processor with at least one x86 instruction set core, in order to achieve substantially the same result as an Intel processor with at least one x86 instruction set core. The x86 compiler 282 represents a compiler that is operable to generate x86 binary code 284 (e.g., object code) that can, with or without additional linkage processing, be executed on the processor with at least one x86 instruction set core 286.

Similarly, FIG. 9 shows the program in the high-level language 280 may be compiled using an alternative instruction set compiler 288 to generate alternative instruction set binary code 290 that may be natively executed by a processor without at least one x86 instruction set core 292 (e.g., a processor with processor cores 54 that execute the MIPS instruction set of MIPS Technologies of Sunnyvale, CA and/or that execute the ARM instruction set of ARM Holdings of Sunnyvale, CA). An instruction converter 294 is used to convert the x86 binary code 284 into code that may be natively executed by the processor without an x86 instruction set core 292. This converted code is not likely to be the same as the alternative instruction set binary code 290 because an instruction converter capable of this is difficult to make; however, the converted code may accomplish the general operation and be made up of instructions from the alternative instruction set. Thus, the instruction converter 294 represents software, firmware, hardware, or a combination thereof that, through emulation, simulation or any other process, allows a processor or other electronic device that does not have an x86 instruction set processor or core to execute the x86 binary code 284.

### Interrupt Handling

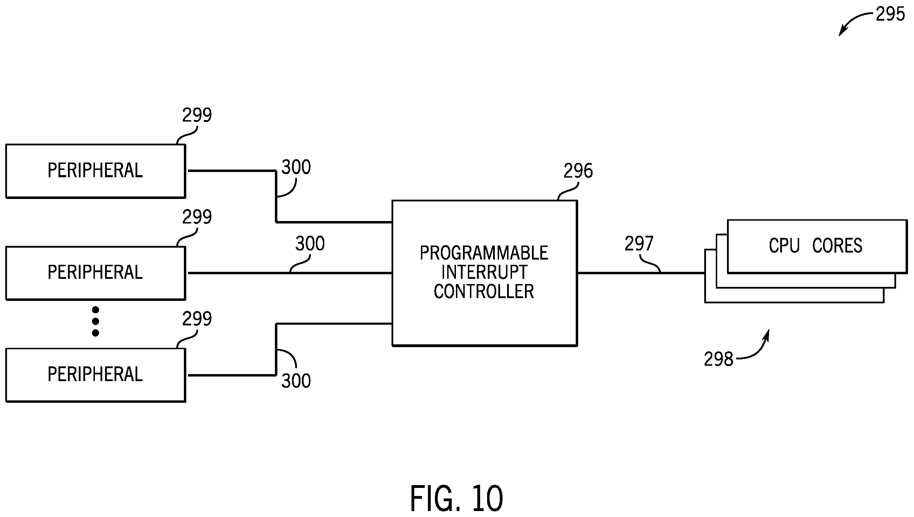

FIG. 10 shows an interrupt system 295 that may be part of any of the foregoing processors/SoCs. As illustrated, the interrupt system 295 includes an interrupt controller 296 to control transmission of interrupts 297 to respective cores 298 of the processor/SoC. Although the interrupts 297 are discussed for the following embodiments, it should be understood that the interrupt controller 296 may also be used to manage exceptions and/or the processor may include an exceptions controller that may be used to manage exceptions similarly to how the interrupt controller 296 is discussed as handling interrupts. The interrupts may be generated internally within the interrupt controller 296 or another part of the processor/SoC (e.g., peripheral devices). Additionally or alternatively such as in Internet of Things (IoT) devices, wearable devices, and tablets, and mobile phones, the interrupt controller 296 may couple to one or more peripherals 299 that transmit interrupt requests 300 to the interrupt controller 296. The peripherals 299 may include keypads, SD card readers, and/or other I/O devices. The interrupt controller 296 determines when to release the interrupts 297 to the cores 298 generated from the interrupt requests 300. Although the cores 298 are discussed as the endpoints for the interrupts 297 herein, the endpoint for the interrupt 297 may include any suitable location in the processor/SoC.

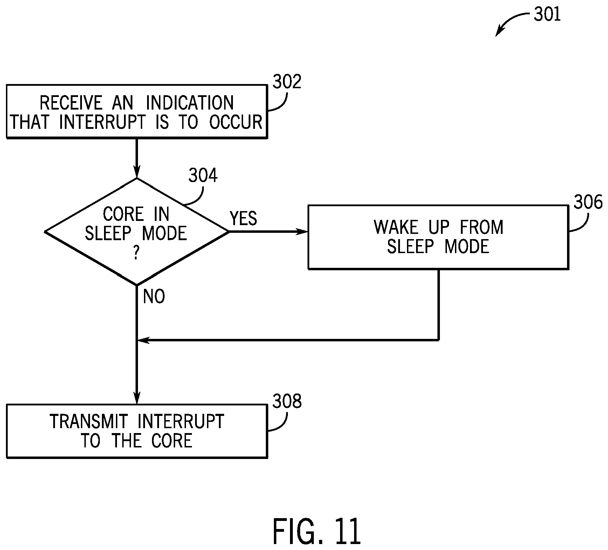

FIG. 11 shows a flow diagram of a process 301 that may be used by the interrupt controller 296 to release the interrupts 297 each time an interrupt request 300 is pending in an on-demand basis. As illustrated, the interrupt controller 296 receives an indication that an interrupt 297 is to occur (block 302). For instance, some value may be received (e.g., from a peripheral 299) by the interrupt controller 296 as an interrupt request 300 indicating that one or more cores 298 is to be interrupted and/or the interrupt controller 296 has internally determined that one or more cores 298 are to be interrupted based on calculations or receipts by the interrupt controller 296. The interrupt controller 296 determines whether a targeted core 298 is in a sleep mode (block 304). If the targeted core 298 is in a sleep mode, the interrupt controller 296 (or any other part of the processor) wakes the core 298 up from the sleep mode (block 306). The interrupt 297 is transmitted (e.g., released) from the interrupt controller 296 to the core 298 (block 308). In other words, each transmission of the interrupts 297 may be transmitted or released to the cores 298 when the interrupt 297 is ready. However, as previously noted, such an on-demand scheme to handle interruptions may cause a processor/SoC to be unable to take advantage of sleep modes due to continuous handling of the interrupts 297. Instead, an alternative scheme may be used to cluster interrupts 297 to prevent the constant awakening of the cores 298.

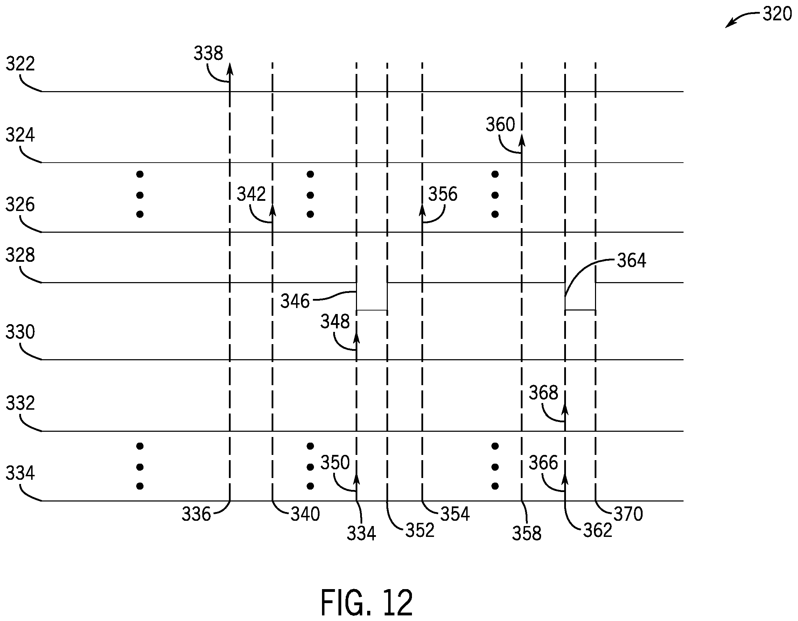

To avoid such issues, interrupts 297 may be aggregated into clusters where the processor/SoC may place cores 298 in sleep states for longer durations without waking. FIG. 12 is a timing diagram 320 reflecting aggregation based on holding requested interrupts until a waken signal is asserted. As illustrated, the timing diagram 320 includes lines 322, 324, 326, 328, 330, 332, and 334. The line 322 corresponds to a first interrupt request 300, the line 324 corresponds to a second interrupt request 300, and the line 326 corresponds to an *ith* interrupt request 300. The line 328 corresponds to a waken signal used to waken the core(s) 298 to service pending interrupts. The line 330 corresponds to a first interrupt 297 that corresponds to the first interrupt request 300. The line 332 corresponds to a second interrupt 297 that corresponds to the second interrupt request 300. The line 334 corresponds to an *ith* interrupt 297 that corresponds to the *ith* interrupt request 300. At time 336, a pulse 338 indicates assertion of the first interrupt request 300 indicating a request of the first interrupt 297. Similarly, at time 340, a pulse 342 indicates assertion of the *ith* interrupt request 300 indicating a request of the *ith* interrupt 297. However, at times 336 and 340, the waken signal is not asserted, causing the interrupt controller 296 to hold back release of the first and *ith* interrupts 297 until time 344 when the assertion 346 of the waken signal occurs. Due to the assertion 346, the interrupt controller 296 releases the first and *ith* interrupts 297 indicated by pulses 348 and 350, respectively. Once deassertion of the waken signal occurs at time 352, interrupts 297 are again held until another assertion of the next waken signal occurs. Specifically, at time 354, a pulse 356 indicating a request of the *ith* interrupt 297 and, at time 358, a pulse 360 indicating a request of the second interrupt 297. However, the *ith* and second interrupts 297 are held until time 362 when an assertion 364 of the waken signal occurs. Due to the assertion 364, pulses 366 and 368 indicate transmission of the *ith* and second interrupts 297 to the respective core(s) 298. After time 370 when the waken signal is deasserted, future interrupts 297 are again held until a next assertion of the waken signal.

Although a processor/SoC utilizing the timing diagram 320 may cluster interrupts 297, the scheme relies upon creation and transmission of a dedicated waken signal that it transmitted to and received by the interrupt controller 296 over some connection using some protocol (e.g., peripheral component interconnect express (PCIE)). Thus, such processors/SoC's may require that the specific messaging mechanism (e.g., PCIe) exist in the design of the processor/SoC putting extraneous requirements on the processor/SoC beyond some planned implementations.

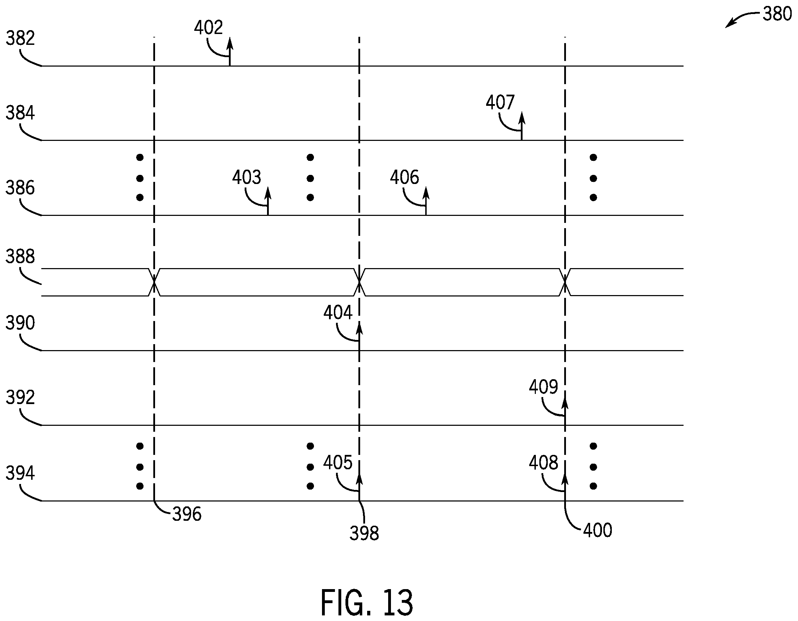

FIG. 13 is a timing diagram 380 of an alternative clustering process that utilizes a timer for releasing held interrupts 297. As illustrated, the timing diagram 380 includes lines 382, 384, 386, 388, 390, 392, and 394. Lines 382, 384, and 386 correspond to first, second, and *ith* interrupt requests 300, respectively. Line 388 corresponds to a periodic timer that transitions at times 396, 398, and 400 to cause the interrupt controller 296 to release/transmit held interrupts 297. Lines 390, 392, and 394 correspond to first, second, and *ith* interrupts 297. As illustrated, pulses 402 and 403 respectively indicate that the requests corresponding to the first and *ith* interrupts 297 have been received but held until a next toggle of the periodic timer. At time 398, when the periodic timer toggles, pulses 404 and 405 show respective transmission/release of the first and *ith* interrupts 297 from the interrupt controller 296 to the cores 298. Similarly, pulses 406 and 407 respectively indicate that the requests corresponding to the *ith* and second interrupts 297 have been received but held until a next toggle of the periodic timer. At time 400, when the periodic timer toggles, pulses 408 and 409 show respective transmission/release of the *ith* and second interrupts 297 from the interrupt controller 296 to the cores 298. Although the periodic timer may cluster the interrupts 297, the aperiodic nature of the interrupts 297 may leave additional available improvements in clustering the interrupts 297 in a more efficient manner. For example, the free running clock may run for long period where no interrupts are received and potentially pointlessly consuming power.

To accommodate the aperiodic nature of the interrupts 297, the interrupts 297 may be organized into membership groups. The membership groups may include an association of interrupts that frequently occur together. The release of an interrupt 297 may be held until a release that is at least partially dependent upon receipt of other interrupts 297 in the membership group.

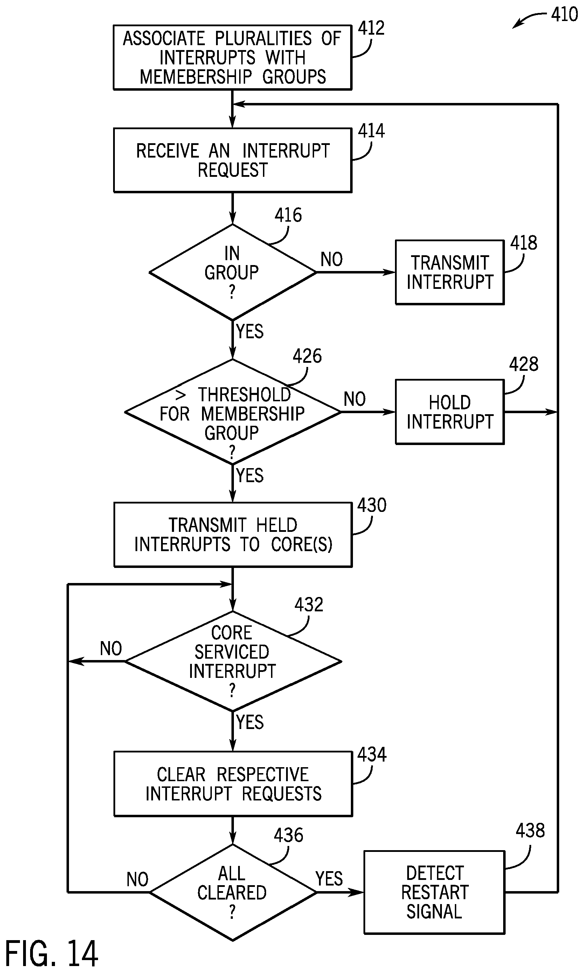

FIG. 14 is a flow diagram of a process 410 that uses membership groups for clustering interrupts. The interrupt controller 296 (or another part of the processor) associates a one or more pluralities of interrupts with respective membership groups (block 412). For instance, a membership group may indicate that the interrupts occur together frequently and may be stored in a register. Additionally or alternatively, the membership groups may be user-defined. The number of interrupts in a membership group may be a relatively small number (e.g., 2) of interrupts up to a relatively large number (e.g., 100s) of interrupts. In some embodiments, each interrupt may be associated with no more than one membership group. Alternatively, at least one interrupt may be associated with more than one membership group.

The interrupt controller 296 receives an interrupt request 300 (block 414). The interrupt controller 296 determines whether the interrupt 297 is associated with a membership group (block 416). If the interrupt 297 is not associated with the membership group, the interrupt controller 296 may transmit the interrupt 297 without further delay (block 418). For example, critical interrupts (e.g., time-critical interrupts) may be prevented from being associated with membership groups to ensure that critical interrupts are transmitted without additional delay due to holding the interrupt.

If the interrupt 297 is associated with a membership group, the interrupt controller 296 determines whether a threshold number of interrupts 297 in the membership group has been exceeded by receipt of the interrupt 297 (block 426). For example, in some embodiments, the threshold may be set such that all held interrupts 297 in the membership group are released only after a certain number (e.g., 2, 3, 4, or all) of interrupts have been requested for the membership group. For example, the number of interrupts 297 for the threshold may be determined using heuristics/empirical testing. If the threshold has not been exceeded, the interrupt controller 296 holds the interrupt 297 (block 428). For instance, the interrupt request 300 may remain asserted until the interrupt 297 is transmitted and/or processed by the respective core 298 after receiving another interrupt request 300 for the membership group.

If the threshold has been surpassed, the interrupt controller 296 transmits all held interrupts 297 in the membership group to one or more respective core(s) 298 (block 430). The interrupt controller 296 waits until the core(s) 298 have serviced any of the transmitted interrupts 297 (block 432). Upon processing of an interrupt, the interrupt controller 296 clears a respective interrupt request 300 of the membership group (block 434). For example, the interrupt controller 296 (and/or the core(s) 298) may transmit a message to the peripheral 299 requesting the interrupt 297 and/or may a clear a latch latching the respective interrupt request 300.

Once all of the interrupt requests 300 of the membership group have been cleared (block 436), the interrupt controller 296 may restart the interrupt clustering for the membership group. For instance, the interrupt controller 296 may generate a detect restart signal clearing an interrupt release control and initiating control logic to cluster a next set of interrupt requests 300 in the membership group (block 438).

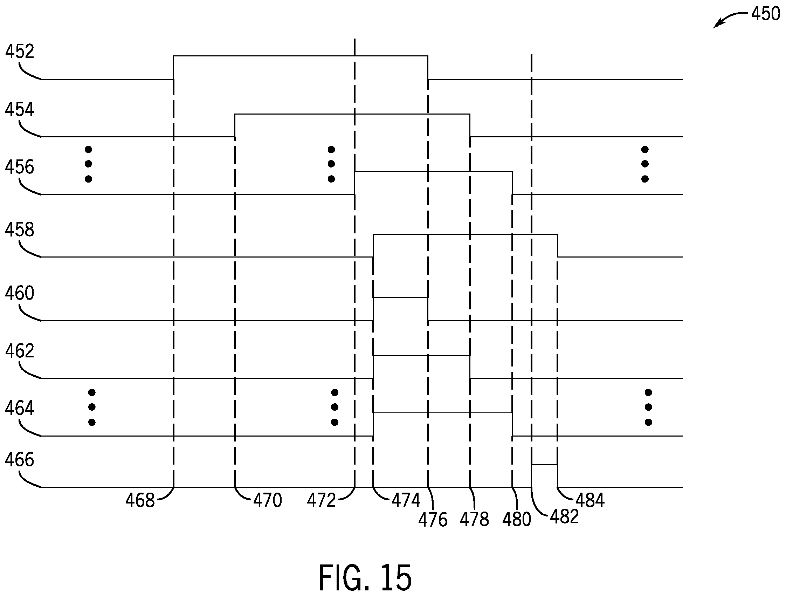

FIG. 15 is a timing diagram 450 that may reflect timing signals occurring when utilizing the process 410. As illustrated, the timing diagram 450 includes lines 452, 454, 456, 458, 460, 462, 464, and 466. The lines 452, 454, and 456 correspond to first, second, and *ith* interrupt requests 300. The line 458 corresponds to a release interrupt requests signal that, when asserted, is used to release held interrupt requests 300. The lines 460, 462, and 464 corresponds to first, second, and *ith* interrupts 297 corresponding to respective lines 452, 454, and 456. The line 466 corresponds to a detect restart signal that is used to clear the release interrupt requests signal and initiate control logic to cluster a next set of interrupt requests 300.

At time 468, the interrupt controller 296 receives the first interrupt request 300. At time 470, the interrupt controller 296 receives the second interrupt request 300. At time 472, the interrupt controller 296 receives the *ith* interrupt request 300. In the illustrated embodiment, all of the illustrated interrupts are in a same membership group. Furthermore, as illustrated, the *ith* interrupt request 300 causes the threshold for the membership group to be surpassed. Due to this threshold being surpassed at time 474, the release interrupt requests signal is asserted causing the first, second, and *ith* interrupts 297 (along with any other interrupts 297 in the membership group) to be transmitted from the interrupt controller 296. At time 476, the core(s) 298 completes servicing of the first interrupt 297, and the first interrupt request 300 is cleared. At time 478, the core(s) 298 completes servicing of the second interrupt 297, and the second interrupt request 300 is cleared. At time 480, the core(s) 298 completes servicing of the *ith* interrupt 297, and the *ith* interrupt request 300 is cleared. At time 482, the detect restart signal is asserted since all held interrupts 297 of the membership group have been cleared. At time 484, the release interrupt requests signal is deasserted based on the rising and/or falling edge of the detect restart signal. Due to the deassertion of the release interrupt requests signal, future incoming interrupts 297 corresponding to the membership group are held until the threshold has again been surpassed.

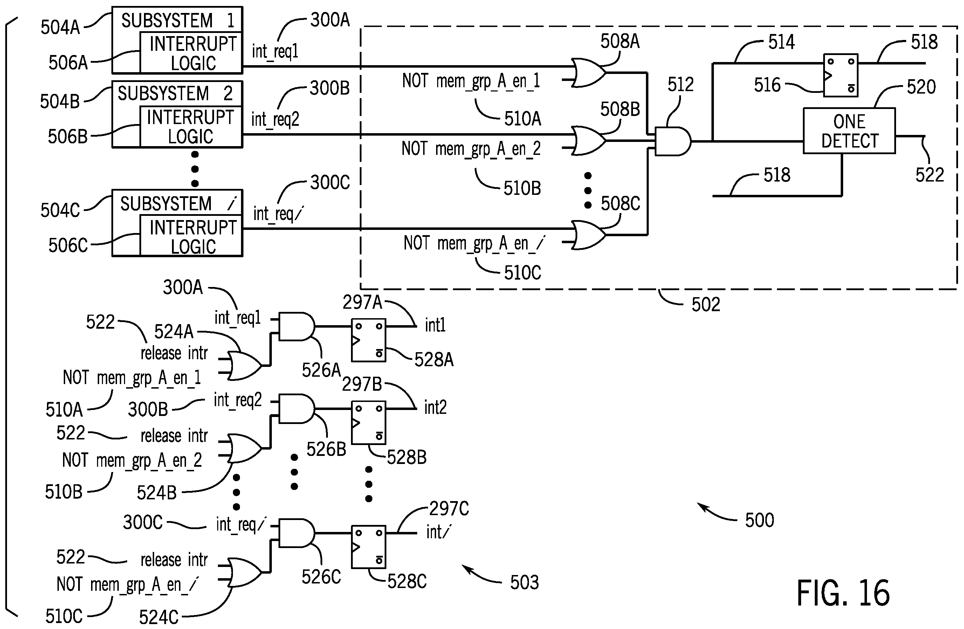

FIG. 16 illustrates an embodiment of clustering circuitry 500 of the interrupt controller 296 for a membership group according to the process 410. Accordingly, each processor/SoC may include multiple clustering circuitries 500 with one for each membership group. Furthermore, the clustering circuitry 500 may be implemented using software, hardware, and/or a combination thereof. As illustrated, the clustering circuitry 500 includes detection circuitry 502 and holding circuitry 503. The detection circuitry 502 is used to detect whether the threshold number (e.g., all) interrupts for the membership group have been received. As illustrated, one or more subsystems 504 (e.g., peripherals or internal circuitry) may include respective interrupt logic 506 to generate respective interrupt requests 300. The subsystems 504 are individually referenced as subsystems 504A, 504B, and 504C respective interrupt requests 300A, 300B, and 300C from respective interrupt logics 506A, 506B, and 506C. Although the illustrated subsystems 504 each output only a single interrupt request 300, at least some embodiments of the processor/SoC may include at least one subsystem 504 outputting multiple interrupt requests on different output lines.

Each interrupt request 300 is transmitted to a respective OR gate 508 of the detection circuitry 502. The OR gate 508 may be used to enable/disable the detection in the detection circuitry 502 based on a disable signal 510, individually referenced as disable signals 510A, 510B, and 510C. The disable signals 510 are used to indicate that the respective interrupt 297 is associated with the membership group handled by the clustering circuitry 500. The disable signal 510 may be controlled based on values in the register used to track member interrupts of the membership group. Using the disable signal 510, the OR gates 508A, 508B, and 508C transmit respective outputs effectively causing the respective interrupt requests 300 to make no changes at an AND gate 512 to keep the AND gate 512 from causing interrupts 297 to be held. Thus, the clustering circuitry 500 may be programmable within the interrupt controller 296 using respective disable signals 510 to control which interrupt requests 300 are included in the membership group. Upon each input to the AND gate 512 transitioning high via a respective received interrupt request 300 or an assertion of the respective disable signal 510, the AND gate 512 asserts a detection signal 514 indicating that all of the associated interrupts for the membership group have been requested. In some embodiments, the AND gate 512 may be replaced by a counting mechanism that counts a number of threshold requests until a threshold is reached after which the detection signal 514 is output. The detection signal 514 is transmitted to a pulse generator 516 that outputs the detect restart signal 518 upon receipt of an indication that the respective interrupts 297 have been processed (e.g., upon receipt of a clock signal after the indication). The detection signal 514 is also transmitted to a one-detect circuit 520 that asserts a release interrupt requests signal 522 after a pulse is transmitted out of the AND gate 512 until the detect restart signal 518 resets the one-detect circuit 520.

The holding circuitry 503 for the membership group receives the release interrupt requests signal 522 at respective OR gates 524A, 524B, and 524C for each respective interrupt 297. The OR gates 524 also receive the respective disable signals 510. The respective interrupt 297 is held at a respective AND gate 526 (e.g., AND gate 526A, 526B, or 526C) until an output of the respective OR gate 524 transitions high. In other words, if the respective interrupt 297 is not included in the membership group (e.g., is a critical interrupt) or the detection circuitry 502 has indicated that held interrupts 297 are to be released, the AND gate 526 transmits the respective interrupt request 300 to a respective latch 528 to transmit the respective interrupt to the respective core(s) 298 (e.g., on a next clock cycle).

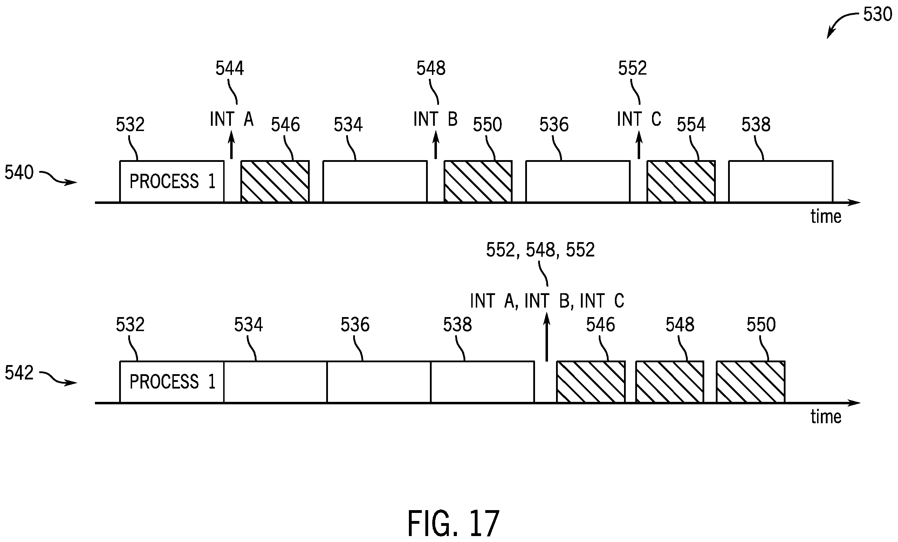

As may be appreciated in light of the foregoing disclosure, in wireless, mobility, and IoT product spaces, power consumption may be a major attribute that enables product differentiation between manufacturers To this point, the interrupt clustering herein may provide enhanced power efficiency in at least such devices including tablets, handheld, laptops, and wearable devices, where power consumption may be critical. This is true because the interrupt clustering discussed herein reduces non-critical system activity to reduce power consumption. By combining as many interrupt events as possible and servicing those interrupts at the same time, system activity is reduced as opposed to halting current activity, switching to service a single interrupt, and then resuming with the current activity, as illustrated in FIG. 17. Switching processing to service an interrupt may mean that the code to process the interrupt will necessarily be loaded to system main memory when not already present in internal caching In addition, system registers may be swapped to handle the new context also consuming additional power.

FIG. 17 shows a timing diagram 530 with processing periods 532, 534, 536, and 538 used to perform a process using unclustered interrupt processing 540 and using clustered interrupt processing 542. As illustrated, in the unclustered interrupt processing 540, when an interrupt 544 is received, the processor services the interrupt 544 in period 546. Also, in the unclustered interrupt processing 540, when an interrupt 548 is received, the processor services the interrupt 548 in period 550. Additionally, in the unclustered interrupt processing 540, when an interrupt 552 is received, the processor services the interrupt 552 in period 554. Accordingly, during the servicing of the interrupts 544, 548, and 552 and performance of the process, six content switches are performed. However, with the clustered interrupt processing 542, there are only three context switches by delaying interrupts 544, 548, and 552 until after the process flow is completed further elucidating the usefulness of clustering interrupts. However, in wireless and mobile devices (or other devices where processing or power consumption may be limited) additional limitations may be placed on clustering beyond membership groups alone. For example, such devices and/or other devices may benefit from holding interrupts 297 until some event (e.g., an external event) occurs.

Specifically, in wireless and mobile devices, there may typically be a mixture of peripherals 299 which trigger interrupt requests 300 in the SoC. The interrupts 297 may have varying degrees of latency in which each interrupt 297 is to be serviced before information is lost if the interrupt 297 is not serviced in time. For example, in cell phone chip applications, there are low-latency interrupt sources (such as video, graphics, display, and the like) and high-latency interrupt sources (such as voice (microphone), keypad, touchpad, sensors, camera, and the like). Low-latency interrupt sources may be less than ideal candidates for interrupt clustering. However, high-latency interrupt sources may benefit more from interrupt clustering. For example, in voice processing on the cell phone chip, sampling (e.g., 8kHz pulse-code modulation (PCM)) may be used. The tenths of milliseconds delay before a next voice sample is to be processed means that it may be unnecessary to interrupt the endpoint before the next voice sample arrives.

Additionally, in the cell phone chip applications, some endpoints may consume information from the interrupt sources using processing endpoints to process information, storage endpoints (e.g., flash, SD cards, SDRAM, USB, and the like) to retain the information, and/or radio endpoints (e.g., transmitter and/or receiver) to relay the information. Even though the endpoint may have multiple channels, the endpoint may be optimized for performing one action at a time. For instance, a flash NAND chip may have only one datapath I/O and stores only one channel at a time.

Endpoint activity may be used to cluster interrupt requests. Furthermore, endpoint activity (e.g., heuristics) may be used to control an external event indication to trigger the release of the clustered interrupts 297. As an example, in the case when the core 298 is the endpoint, a measure of the core 298 activity may be represented as a hardware signal. A comparator block compares the activity measurement against a programmed threshold. When the CPU activity drops below the threshold, the comparator generates a release signal to the interrupt controller 296. In such cases, the high-latency interrupts may be serviced later when the activity level of the core 298 drops below the threshold.

Similarly, in the case of storage and radio endpoints, activity to those endpoints may be monitored in a hardware block. High-latency interrupts that also use those endpoints may be clustered as a group and released when activity to those endpoints has dropped below a programmed threshold.

An alternative metric (e.g., heuristics) that may be used to determine the external event trigger release is prioritization of tasks by the endpoint. Priorities may be assigned to tasks (e.g., core processes, storage memory block transfers, radio packets) being performed by the endpoint. Clustered interrupts may be delayed from release until the higher priority task is completed when the clustered interrupts are related to the higher priority task being serviced. For example, a voice packet is to be processed and stored to SDRAM with video information retrieved from the same storage device. The audio interrupt may be clustered with other interrupts that also utilize access to the SDRAM until the higher priority video information retrieval is completed. Other suitable external events may be used to control release of lower priority interrupts.

Since the clustered interrupts do not have infinite latency before being processed, the external event trigger release may have a fail-safe mechanism to prevent loss of information. For a set of interrupts 297 clustered as a group, the minimum latency may be determined by the interrupt that has the lowest latency requirement. Additionally or alternatively, the minimum latency may be derived from empirical testing. The external event trigger release logic would track the minimum latency and release the clustered interrupts 297 if the expected heuristic event has not finished before the minimum latency time.

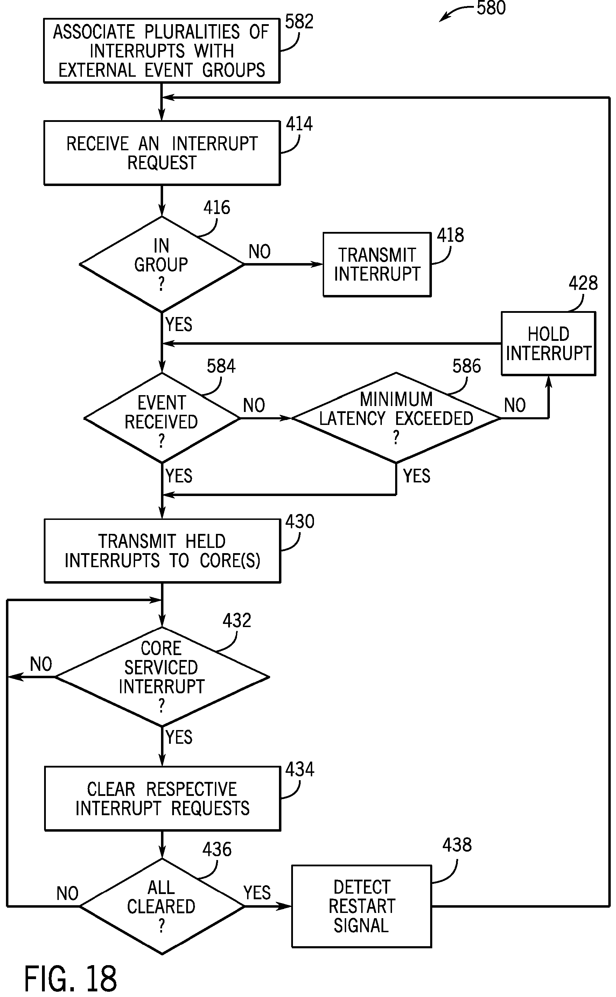

FIG. 18 is a flow diagram of a process 580 utilized to cluster interrupts 297 in timing groups. The process 580 may be identical to the process 410 except that the process 580 has blocks 582, 584, and 586 in place of blocks 412 and 426. Specifically, process 580 is applicable to interrupts that are part of an external event group that are held until the external event has been received. For instance, the process 580 begins with associating interrupts 297 to an external event group (block 582). Likewise, in addition to or instead of checking whether a threshold number of interrupts have been received as done in the process 410, the interrupt controller 296 may check whether an indication that an external event associated with the external event group has been received (block 584). As previously noted, since the holding of interrupts based on an external event may not continue indefinitely, the holding may be limited in duration. For example, if a minimum latency has been reached (block 586) or the external event has been received, the interrupt controller 296 transmits the interrupts to the core(s) 298. The minimum latency may correspond to an earliest time after which one of the interrupt requests 300 is to be fulfilled after receipt. Additionally or alternatively, the minimum latency may be preset (e.g., using empirical testing). If the event has not been received and the minimum latency has not been reached, the interrupt 297 is held (block 428). Otherwise, the held interrupts are transmitted to the core(s) 298.

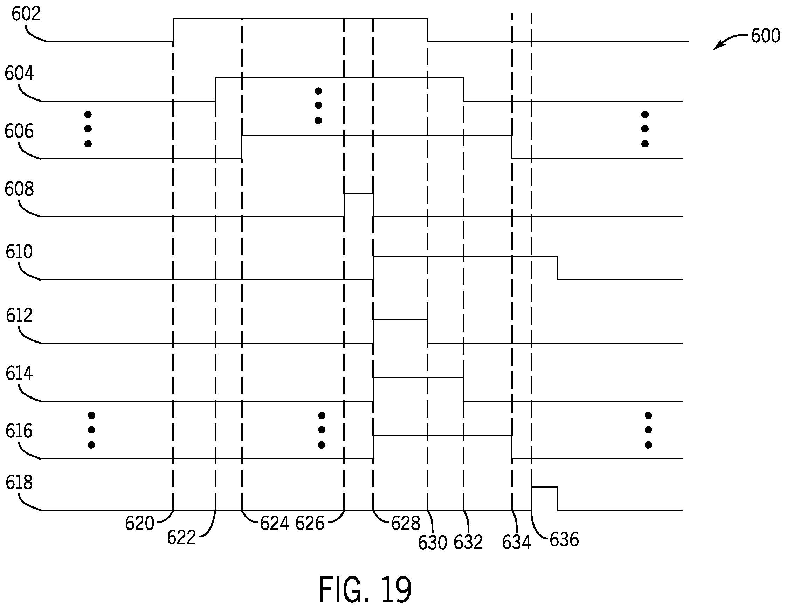

FIG. 19 is a timing diagram 600 that may result from the processor/SoC utilizing the process 580 of FIG. 18. As illustrated, the timing diagram 600 includes lines 602, 604, 606, 608, 610, 612, 614, 616, and 618. The lines 602, 604, and 606 correspond to first, second, and *ith* interrupt requests 300. The line 608 corresponds to an indication of an external signal that is asserted as indication that the external event outside of the interrupt controller has occurred. The line 610 corresponds to the release interrupt requests signal 522. The lines 612, 614, and 616 correspond to first, second, and *ith* interrupts 297. The line 618 corresponds to the detect restart signal 518.

At time 620, the first interrupt request 300 is received, but the first interrupt 297 is held as part of the external event group since the external event has not occurred (and the minimum latency has not been reached). At time 622, the second interrupt request 300 is received, but the second interrupt 297 is held as part of the external event group since the external event has not occurred (and the minimum latency has not been reached). At time 624, the *ith* interrupt request 300 is received, but the *ith* interrupt 297 is held as part of the external event group since the external event has not occurred (and the minimum latency has not been reached). At time 626, an indication of the external event is received. At time 628, the held interrupts 297 are transmitted to the respective core(s) 298. The held interrupts 297 may be released based on a rising edge of the indication, a falling edge of the indication, or after some propagation delay after either edge.

The first interrupt 297 is serviced at time 630, and the first interrupt request 300 is cleared. The second interrupt 297 is serviced at time 632, and the second interrupt request 300 is cleared. The *ith* interrupt 297 is serviced at time 634, and the *ith* interrupt request 300 is cleared. Based on all the held interrupts 297 being cleared, the detect restart signal 518 is pulsed at time 636. Any interrupts received after the detect restart signal 518 may be delayed until a next external event or until the minimum latency duration has elapsed.

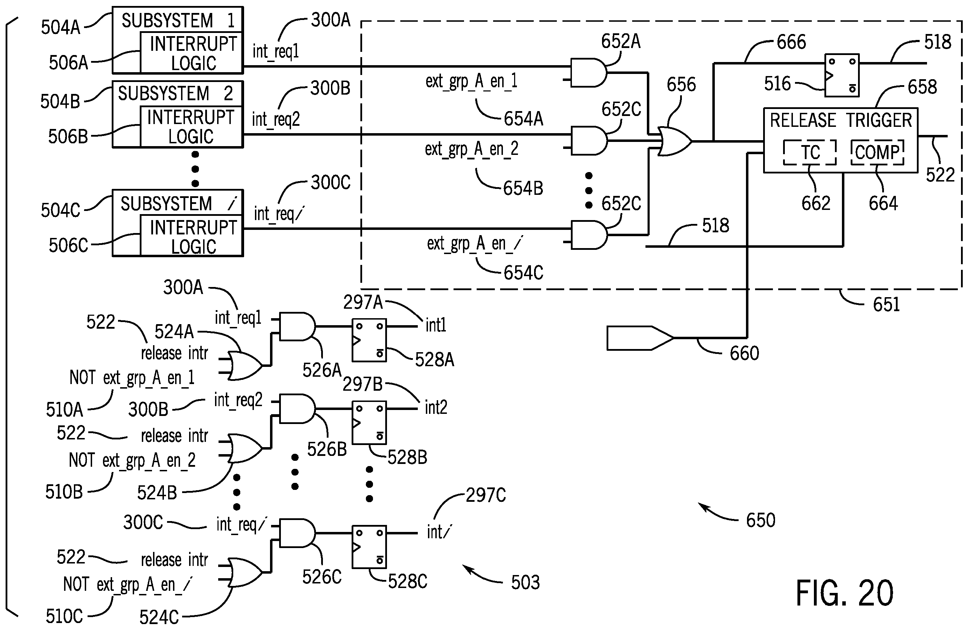

FIG. 20 is a schematic diagram of clustering circuitry 650 that functions similarly to the clustering circuitry 500. Specifically, the clustering circuitry 650 receives disable signals 510 that may be used to bypass timing event group-based interrupt clustering for a respective interrupt 297 (e.g., a time-critical interrupt 297) in the holding circuitry 503. The disable signals 510 (and/or related enable signals 654) may be generated (e.g., by setting a bit) using a register to configure which interrupts are to be included as part of the event group. The clustering circuitry 650 may be used to detect and hold interrupts in a single external event group. Other instances of the clustering circuitry 650 may be used to detect and hold other external event groups. Accordingly, any suitable number of instances of the clustering circuitry 650 may be used for a suitable number of external event groups. Furthermore, the number of interrupts 297 in each external event group may be different for each external group and may include any suitable number of interrupts 297 that may be associated with the respective event.

As illustrated, the clustering circuitry 650 includes detection circuitry 651 and the holding circuitry 503. The detection circuitry 651 is used to control the holding circuitry 503 to ensure that the interrupt requests 300 are held until the external event and/or minimum latency occurs. The clustering circuitry 650 differs from the clustering circuitry 500 in that the detection circuitry 651 includes respective AND gates 652A, 652B, and 652C each configured to receive a respective interrupt request 300. When any AND gate 652 receives a respective assertion of a respective interrupt request 300 and a respective enable signal 654, the AND gate 652 outputs an assertion to a respective OR gate 656A, 656B, or 656C. The assertion propagates through the respective OR gate 656 to release trigger circuitry 658. The propagation of the assertion to the release trigger circuitry 658 indicate that at least one interrupt 297 may be held until an indication of an external event 660 is received. Upon receipt of the indication of the external event 660, the release interrupt requests signal 522 is toggled.

In some embodiments, the release trigger circuitry 658 may include tracking circuitry 662 to determine how long the interrupt has been held. For example, the tracking circuitry 662 may include a counter circuit configured to count a number of cycles (e.g., minimum latency) since the assertion was propagated from the OR gate 656. In some embodiments, the duration determined by the tracking circuitry 662 may be transmitted to a comparator 664 that compares the duration to a threshold duration. The threshold duration may be set for the external event group based on heuristics/empirical testing or other suitable techniques. If the threshold has been reached, the release trigger circuitry 658 may assert the release interrupt requests signal 522 even if the indication of the external event 660 has not been received.

Also, once the detection circuitry 651 has determined that all held interrupts 297 are cleared, a detection signal 666 may be toggled to generate the detect restart signal 518 via the pulse generator 516. For instance, detection signal 666 may transition from high to low after all of the interrupts requests 300 are cleared for the external event group. The assertion of the detect restart signal 518 may cause the release interrupt requests signal 522 to be deasserted and to place the release trigger circuitry 658 back to an initial state prepared to hold interrupt requests 300 until a next pulse is received on the indication of the external event 660. It should be noted that any aspect of the clustering circuitry 650 (e.g., the tracking circuitry 662 and the comparator 664) may be incorporated in the clustering circuitry 500 of FIG. 16.

The holding circuitry 503 functions as discussed above in relation to the FIG. 16.

In addition to membership groups and/or external event groups, interrupts are organized into timing groups where counters/timers are started when an interrupt request 300 corresponding to the timing group has been received. Once the timing group counter/timer has begun, any incoming interrupt requests 300 for the timing group is held until the counter/timer reaches a target value (e.g., 0) where the corresponding interrupts 297 are transmitted to respective endpoints. Once the interrupts 297 are transmitted and/or serviced, the counter/timer may be reset and/or set in an indeterminate state but without running the counter/timer until a next interrupt in the group is received. As may be appreciated, the timing groups may be a group of interrupts 297 that typically occur within a certain time window. The size of the timing window may be set using empirical testing or other suitable mechanisms. The duration of the counter/timer may be set to this time window with an optional additional cushion. Additionally or alternatively, the duration may be tested empirically to check for enhanced efficiency without causing unintended issues with timing. The timing group may be used to release interrupts within a time window of a first received interrupt request 300 for the group without perpetually running a periodic timer that may be used to release held interrupts as the periodic timer may consume power unnecessarily when no interrupts have been received.

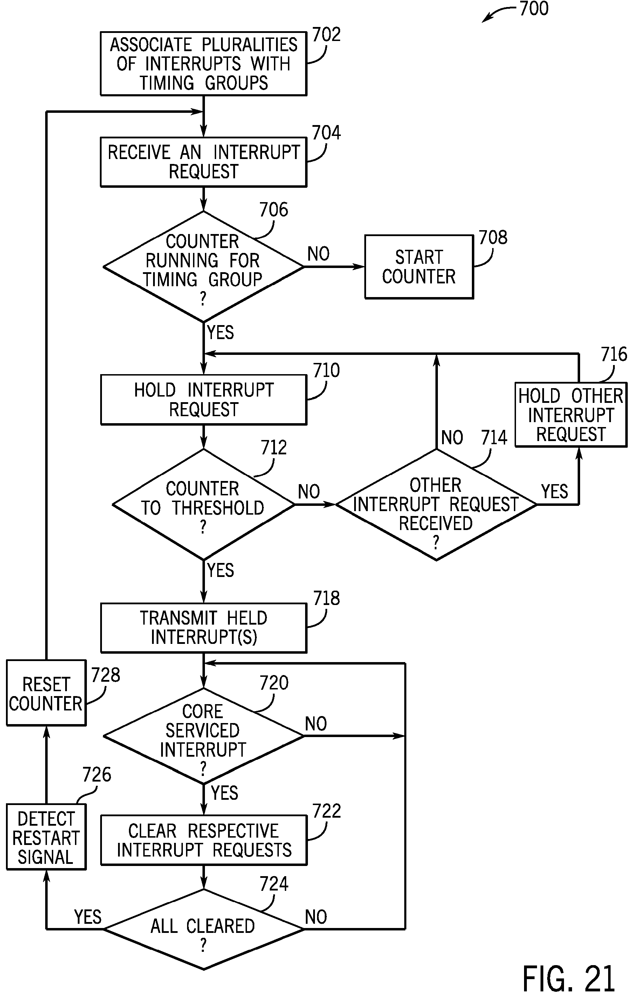

FIG. 21 is a flow diagram of a process 700 that may be used to cluster interrupts 297 into timing groups. The processor/SoC associates one or more pluralities with respective timing groups (block 702). As previously noted, these timing groups may be used to associate interrupts 297 into a timing group to a single counter/timer. For instance, this grouping may be based on the likelihood that the interrupts 297 in the timing group are to be used together and/or typically occur with the threshold time of each other. Additionally or alternatively, the association may be user-programmable thereby enabling a user to program holding of interrupts for the timing group via the interrupt controller 296. Additionally or alternatively, each timing group may be associated with a respective core 298. The interrupt controller 296 receives an interrupt request 300 corresponding to the timing group (block 704). The interrupt controller 296 determines whether a counter/timer for the timing group is currently running (block 706). In some embodiments, checking if the counter/timer is running may include determining/waiting until a counter/timer is ready after a reset. For example, the counter/timer may not be ready between a previous release before the currently released interrupts 297 and the counter being reset after servicing the released interrupts 297. If the counter is not ready, the interrupt controller 296 may delay starting of the counter/timer until the reset is completed. If the timer is not running (and is ready), the interrupt controller 296 may start the counter/timer (block 708).

However, if the timer/counter is already running, the counter/timer need not be started. While the counter/timer is running (or delayed when unready), the respective interrupt request 300 is held by the interrupt controller 296 (block 710). The interrupt controller 296 determines whether the counter/timer has reached a threshold (block 712). For example, the interrupt controller 296 may utilize a comparator to determine whether the counter/timer has reached a value (e.g., 0 when counting down or n when counting up). If the counter/timer has not reached the threshold, the interrupt controller 296 may determine whether other interrupt requests 300 in the timing group have been received (block 714). If other interrupt requests 300 are received while the timer is running, the interrupt controller 296 holds the other interrupt requests 300 (block 716).

Once the counter/timer has reached the threshold, the interrupt controller 296 transmits the held interrupt requests 300 to the endpoints, such as the core 298 (block 718). The interrupt controller 296 waits until the core(s) 298 have serviced any of the transmitted interrupts 297 for the timing group (block 720). Upon processing of an interrupt 297, the interrupt controller 296 (or other part of the processor/SoC) clears a respective interrupt request 300 of the timing group (block 722). For example, the interrupt controller 296 may transmit a message to the peripheral 299 that requested the interrupt 297 and/or may a clear a latch latching the respective interrupt request 300.

Once all of the interrupt requests 300 of the timing group have been cleared (block 724), the interrupt controller 296 may restart the clustering of the timing group. For instance, the interrupt controller 296 may generate the detect restart signal 518 clearing an interrupt release control and initiating control logic to cluster a next set of interrupt requests 300 in the timing group (block 726). Additionally, in readying for the next set of interrupt requests 300 in the timing group, the interrupt controller 296 may utilize the detect restart signal 518 to reset the counter/timer (block 728).

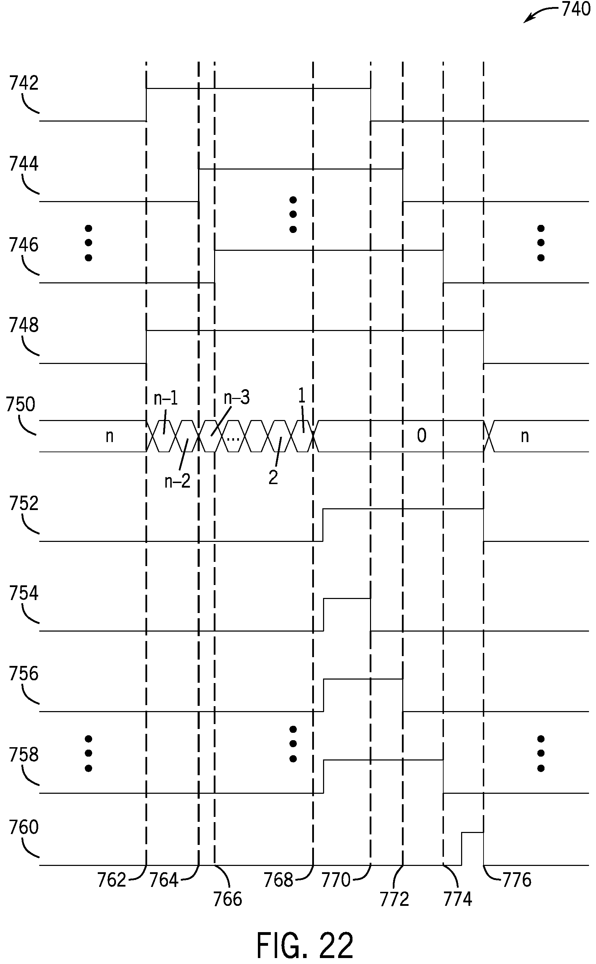

FIG. 22 is a timing diagram 740 using timing-based interrupt clustering for a timing group as shown in the process 700 of FIG. 21. As illustrated, the timing diagram includes lines 742, 744, 746, 748, 750, 752, 754, 756, 758, and 760. The lines 742, 744, and 746 correspond to respective first, second, and *ith* interrupt requests 300 for the timing group. The line 748 corresponds to a counter enable signal that enables/starts the counter/timer running. The line 750 corresponds to the counter/timer. The line 752 corresponds to the release interrupt requests signal 522. The lines 754, 756, and 758 correspond to respective first, second, and *ith* interrupts 297 that respectively correspond to the first, second, and *ith* interrupt requests 300. The line 760 corresponds to the detect restart signal 518.

At time 762, the first interrupt request 300 is received at the interrupt controller 296. The first interrupt request 300 is held, and the interrupt controller 296 toggles the counter enable signal and starts the counter/timer. At time 764, the second interrupt request 300 is received at the interrupt controller. Since the counter/timer is already running, the counter/timer keeps running while the second interrupt request is held until the counter/timer has reached the threshold. At time 766, the third interrupt request 300 is received. Since the counter/timer is already running, the counter/timer keeps running while the second interrupt request is held until the counter/timer has reached the threshold. At time 768, the counter/timer reaches the threshold. After reaching the threshold (e.g., with or without a propagation delay), the first, second, and *ith* interrupt requests 300 that have been held during the counting are transmitted as respective first, second, and *ith* interrupts 297. At time 770, the first interrupt 297 has been serviced and the respective interrupt request 300 has been cleared. At time 772, the second interrupt 297 has been serviced and the respective interrupt request 300 has been cleared. At time 774, the *ith* interrupt 297 has been serviced and the respective interrupt request 300 has been cleared. After all of the interrupts 297 have been serviced, the counter is disabled and reset at time 776. This reset and disable of the counter is based at least in part on a rising edge or a falling edge of a pulse of the detect restart signal 518.

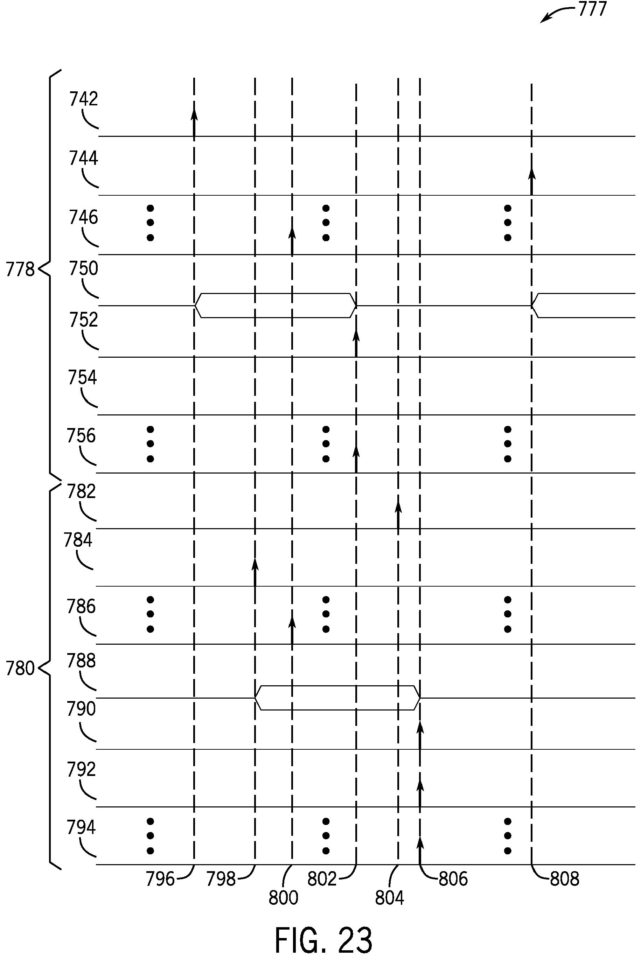

As previously discussed, the processor/SoC may have multiple timing groups. FIG. 23 is a timing diagram 777 that includes two different timing groups: core A timing group 778 and core B timing group 780 for different cores 298. Additionally or alternatively, the timing groups may be organized by any other suitable classification (e.g., typically performed within a time of each other). For instance, the first timing group, core A timing group 778, may be the timing group of the timing diagram 740 of FIG. 22. The second timing group, core B timing group 780, may include lines 782, 784, 786, 788, 790, 792, and 794. The lines 782, 784, and 786 correspond to *ith + 1, ith* + 2, and *ith + j* interrupt requests 300 corresponding to the core B timing group 780. The line 788 corresponds to the counter/timer for the core B timing group 780. The lines 790, 792, and 794 correspond to *ith +* 1, *ith +* 2, and *ith + j* interrupts 297 corresponding to the core B timing group 780.

At time 796, the first interrupt request 300 is received at the interrupt controller 296. Since the first interrupt request 300 is configured as belonging to the core A timing group 778 and the counter/timer of the core A timing group 778 has not already started, the counter/timer of the core A timing group 778 is started. The first interrupt request 300 is also held in the interrupt controller 296 until the counter/timer has crossed a threshold. At time 798, the *ith* + 2 interrupt request 300 is received at the same interrupt controller 296 or another interrupt controller 296 of the processor/SoC. Since the *ith* + 2 interrupt request 300 is configured as belonging to the core B timing group 780 and the counter/timer of the core B timing group 780 has not already started, the counter/timer of the core B timing group 780 is started. The *ith +* 2 interrupt request 300 is also held in the interrupt controller 296 until the counter/timer has crossed a threshold. At time 800, the *ith* interrupt request 300 and the *ith +j* interrupt request 300 are received. Since both corresponding counter/timers are already running, the *ith* interrupt request 300 and the *ith + j* interrupt request 300 are each held until the already running respective counter/timers reach respective thresholds (e.g., determined using heuristics). At time 802, the counter/timer of the core A timing group 778 has reached the threshold, and the first interrupt 297 and the *ith* interrupt are released/transmitted from the interrupt controller 296. At time 804, the *ith +* 1 interrupt request 300 is received. Since the corresponding counter/timer is already running, the *ith* interrupt request 300 is held until the already running counter/timer reaches a threshold. At time 806, the counter/timer of the core B timing group 780 has reached its threshold, and the *ith + 1, ith +* 2, and *ith + j* interrupts 297 are released/transmitted from the interrupt controller 296. The thresholds for the core A timing group 778 and the core B timing group 780 may be the same or different from each other. At time 808, a new cycle of the core A timing group 778 begins with a receipt of the second interrupt request 300. As indicated in the timing diagram 777, each of the timing groups 778 and 780 may operate independently with different counters/timers and interrupt requests 300 operating independently.

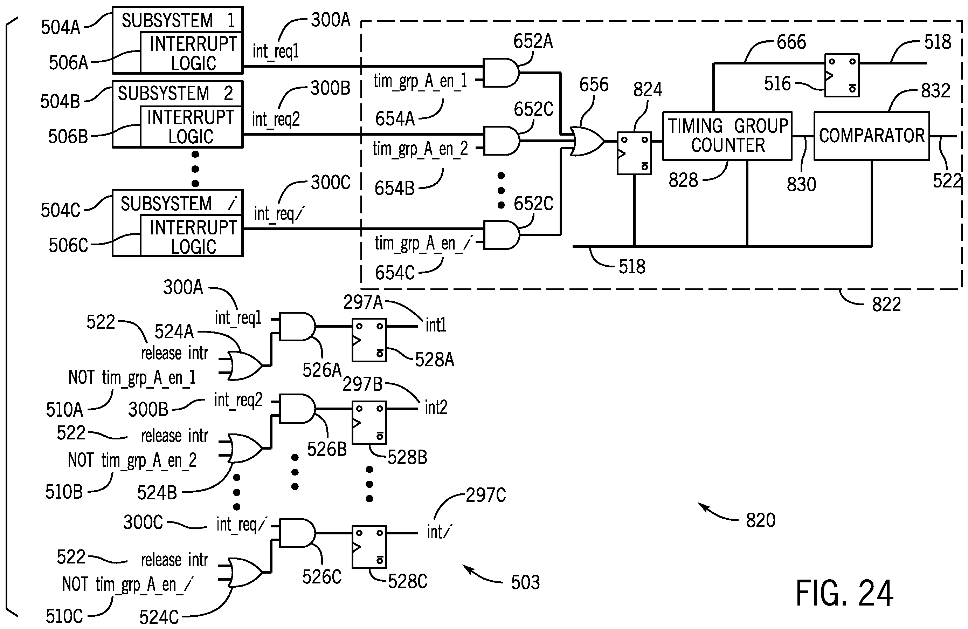

FIG. 24 illustrates clustering circuitry 820 that functions similarly to the clustering circuitries 500 and 650. Specifically, the holding circuitry 503 receives disable signals 510 that may be used to bypass timing group-based interrupt clustering for a respective interrupt 297 (e.g., a time-critical interrupt 297). The disable signals 510 (and/or the related enable signals 654) may be generated (e.g., by setting a bit) using a register to configure which interrupts are to be included as part of the timing group. The clustering circuitry 820 may be used to detect and hold interrupts in a single timing group. Other instances of the clustering circuitry 820 may be used to detect and hold other timing groups. Accordingly, any suitable number of instances of the clustering circuitry 820 may be used for a suitable number of timing groups. Furthermore, the number of interrupts 297 within each timing group may be different than each other and may include any suitable number of interrupts 297 that may be associated with the respective timing group.

As illustrated, the clustering circuitry 820 includes detection circuitry 822 and the holding circuitry 503. The detection circuitry 822 is used to control the holding circuitry 503 to ensure that the interrupt requests 300 are held until the counter/timer meets the corresponding threshold. The clustering circuitry 820 differs from the clustering circuitry 500 in that the detection circuitry 822 includes the respective AND gates 652 each configured to receive a respective interrupt request 300. When any AND gate 652 receives a respective assertion of a respective interrupt request 300 and a respective enable signal 654, the AND gate 652 outputs a pulse to an OR gate 656. The pulse propagates through the OR gate 656 to a latch 824 that latches the assertion as a counter enable 826 upon receipt of a first interrupt request 300 after assertion of the detect restart signal 518. The counter enable 826 causes a timing group counter/timer 828 to begin counting and outputting a timing count 830 to a comparator 832. The comparator 832 compares the timing count 830 to a threshold level (e.g., 0) after which the comparator triggers the release interrupt requests signal 522.

Also, once the detection circuitry 822 has determined that all held interrupts 297 are cleared, the detection signal 666 may be toggled to generate the detect restart signal 518 via the pulse generator 516. For instance, the detection signal 666 may transition from high to low after all of the interrupts requests 300 are cleared for the timing group. The assertion of the detect restart signal 518 may cause the release interrupt requests signal 522 to be deasserted and to reset the timing group counter/timer 828 and/or the comparator 832.

The holding circuitry 503 functions as discussed above in relation to the FIG. 16.

First, second, and *ith* may imply assigned number, priority order, or other nomenclature in various embodiments of the disclosure. For example, the priority order may control which interrupts 297 are serviced first when the clustered interrupts 297 are received together. First, second, and *ith* indexes as used herein may correspond to any number (e.g., 2, 3, 4, 10s, 100s, and the like) of interrupts, interrupt requests, and accompanying circuitry and signals.

As may be appreciated, the disclosure herein uses particular circuits for discussion with logic high and logic low values. However, some embodiments of the disclosure may include inverse logic with substitute logic elements. For example, AND gates may be used to produce inverted logic from a NAND gates, signals may be inverted using inverting amplifiers, or the like.

While the embodiments set forth in the present disclosure may be susceptible to various modifications and alternative forms, specific embodiments have been shown by way of example in the drawings and have been described in detail herein. However, it should be understood that the disclosure is not intended to be limited to the particular forms disclosed. For instance, some embodiments of the processor/SoC disclosed herein may utilize a combination of the grouping mechanisms (e.g., membership groups, external event groups, and/or timing groups) to perform interrupt clustering.

The techniques presented and claimed herein are referenced and applied to material objects and concrete examples of a practical nature that demonstrably improve the present technical field and, as such, are not abstract, intangible or purely theoretical.

## Claims

1. A system (295) comprising:
an interrupt controller (296) comprising:
input terminals configured to receive interrupt requests (300);
output terminals configured to transmit interrupts based on the respective interrupt request (300);
detection circuitry (502) configured to detect whether any interrupt requests (300) of an external event group have been received and whether an external event has occurred, said external event associated with the external event group of the interrupts; and
holding (503) circuitry configured to hold release of the interrupts of the external event group and to release the held interrupts upon receipt of the external event at the interrupt controller;
**characterized in that** interrupts are organized into timing groups where timers are started when an interrupt request corresponding to a respective timing group has been received, wherein each timing group is associated with interrupts that occur within a time window associated with the timing group, wherein a timer of a respective timing group is started when an interrupt request corresponding to the timing group is received, said timer being set to the time window, and wherein the corresponding interrupts are transmitted to respective endpoints when the timer has reached the time window.

2. The system (295) of claim 1, wherein the input terminals are configured to receive the interrupt requests (300) from peripheral devices (299), and the output terminals are configured to transmit the interrupts to one or more endpoints.

3. The system (295) of claim 1, wherein the interrupt controller (296) is configured to transmit the interrupts to processor endpoints configured to process information, to storage endpoints configured to store information, or radio endpoints used to transmit or receive information.

4. The system (295) of anyone of the preceding claims, wherein the interrupt controller (296) is configured to receive a disable signal based on values in a register used to track which interrupts are associated with the external event group, wherein the disable signal causes the respective interrupt to bypass holding in the holding circuitry regardless of whether the external event has been received.

5. The system of claim 4, wherein the respective interrupt is a video, graphics, or display interrupt.

6. The system (295) of claim 1, wherein the detection circuitry (502) is configured to generate a detect restart signal once all held interrupt requests (300) are serviced.

7. The system (295) of claim 6, wherein the detection circuitry (502) is configured to reset release trigger circuitry to reset interrupt clustering in the external event group based at least in part on the detect restart signal until a subsequent external event occurs while holding a subsequently received interrupt request for the external event group.

8. A method comprising:
receiving an interrupt request (300) at an interrupt controller (296), wherein the interrupt request (300) requests an interrupt to be transmitted to an endpoint;
determining that the interrupt is associated with an external event group;
holding transmission of the interrupt until an external event has been received by the interrupt controller (296);
after holding the transmission of the interrupt, determining that the external event has been received by the interrupt controller (296); and
based on the determination that the external event has been received after holding the transmission of the interrupt, transmitting all held interrupts for the external event group from the interrupt controller (296);
**characterized in that** interrupts are organized into timing groups where timers are started when an interrupt request corresponding to a respective timing group has been received, wherein each timing group is associated with interrupts that occur within a time window associated with the timing group, wherein a timer of a respective timing group is started when an interrupt request corresponding to the timing group is received, said timer being set to the time window, and wherein the corresponding interrupts are transmitted to respective endpoints when the timer has reached the time window.

9. The method of claim 8 comprising:
servicing the interrupt; and
based at least in part on servicing the interrupt request, clearing the interrupt request.

10. The method of claim 9 comprising:
determining that all held interrupts for the external event group have been cleared; and
based at least in part on all held interrupts for the external event group having been cleared, generating a detect restart signal.

## Patentansprüche

1. System (295), das Folgendes umfasst:
eine Interrupt-Steuerung (296), die Folgendes umfasst:
Eingangsanschlüsse, die dazu ausgelegt sind, Interrupt-Anforderungen (300) zu empfangen;
Ausgangsanschlüsse, die dazu ausgelegt sind, Interrupts basierend auf der jeweiligen Interrupt-Anforderung (300) zu übertragen;
eine Detektionsschaltungsanordnung (502), die dazu ausgelegt ist, zu detektieren, ob Interrupt-Anforderungen (300) einer externen Ereignisgruppe empfangen wurden und ob ein externes Ereignis aufgetreten ist, wobei das externe Ereignis mit der externen Ereignisgruppe der Interrupts assoziiert ist; und
eine Halteschaltungsanordnung (503), die dazu ausgelegt ist, die Freigabe der Interrupts der externen Ereignisgruppe zu halten und die gehaltenen Interrupts bei Empfang des externen Ereignisses an der Interrupt-Steuerung freizugeben;
**dadurch gekennzeichnet, dass** Interrupts in Timing-Gruppen organisiert sind, in denen Timer gestartet werden, wenn eine Interrupt-Anforderung, die einer jeweiligen Timing-Gruppe entspricht, empfangen wurde, wobei jede Timing-Gruppe mit Interrupts assoziiert ist, die innerhalb eines mit der Timing-Gruppe assoziierten Zeitfensters auftreten, wobei ein Timer einer jeweiligen Timing-Gruppe gestartet wird, wenn eine Interrupt-Anforderung, die der Timing-Gruppe entspricht, empfangen wird, wobei der Timer auf das Zeitfenster gesetzt wird und wobei die entsprechenden Interrupts an jeweilige Endpunkte übertragen werden, wenn der Timer das Zeitfenster erreicht hat.

2. System (295) nach Anspruch 1, wobei die Eingangsanschlüsse dazu ausgelegt sind, die Interrupt-Anforderungen (300) von Peripherievorrichtungen (299) zu empfangen, und die Ausgangsanschlüsse dazu ausgelegt sind, die Interrupts an einen oder mehrere Endpunkte zu übertragen.

3. System (295) nach Anspruch 1, wobei die Interrupt-Steuerung (296) dazu ausgelegt ist, die Interrupts an Prozessorendpunkte, die dazu ausgelegt sind, Informationen zu verarbeiten, an Speicherendpunkte, die dazu ausgelegt sind, Informationen zu speichern, oder Funkendpunkte, die zum Senden oder Empfangen von Informationen verwendet werden, zu übertragen.

4. System (295) nach einem der vorhergehenden Ansprüche, wobei die Interrupt-Steuerung (296) dazu ausgelegt ist, ein Deaktivierungssignal basierend auf Werten in einem Register zu empfangen, das verwendet wird, um zu verfolgen, welche Interrupts mit der externen Ereignisgruppe assoziiert sind, wobei das Deaktivierungssignal bewirkt, dass der jeweilige Interrupt unabhängig davon, ob das externe Ereignis empfangen wurde, das Halten in der Halteschaltungsanordnung umgeht.

5. System nach Anspruch 4, wobei der jeweilige Interrupt ein Video-, Grafik- oder Anzeige-Interrupt ist.

6. System (295) nach Anspruch 1, wobei die Detektionsschaltungsanordnung (502) dazu ausgelegt ist, ein Detektionsneustartsignal zu erzeugen, sobald alle gehaltenen Interrupt-Anforderungen (300) abgearbeitet sind.

7. System (295) nach Anspruch 6, wobei die Detektionsschaltungsanordnung (502) dazu ausgelegt ist, eine Freigabeauslöserschaltungsanordnung zurückzusetzen, um Interrupt-Clustering in der externen Ereignisgruppe zumindest teilweise basierend auf dem Detektionsneustartsignal zurückzusetzen, bis ein nachfolgendes externes Ereignis auftritt, während eine nachfolgend empfangene Interrupt-Anforderung für die externe Ereignisgruppe gehalten wird.

8. Verfahren, das Folgendes umfasst:
Empfangen einer Interrupt-Anforderung (300) an einer Interrupt-Steuerung (296), wobei die Interrupt-Anforderung (300) anfordert, dass ein Interrupt an einen Endpunkt übertragen wird;
Bestimmen, dass der Interrupt mit einer externen Ereignisgruppe assoziiert ist;
Halten der Übertragung des Interrupts, bis ein externes Ereignis durch die Interrupt-Steuerung (296) empfangen wurde;
nach dem Halten der Übertragung des Interrupts, Bestimmen, dass das externe Ereignis durch die Interrupt-Steuerung (296) empfangen wurde; und
Basierend auf der Bestimmung, dass das externe Ereignis empfangen wurde, nachdem die Übertragung des Interrupts gehalten wurde, Übertragen aller gehaltenen Interrupts für die externe Ereignisgruppe von der Interrupt-Steuerung (296);
**dadurch gekennzeichnet, dass** Interrupts in Timing-Gruppen organisiert sind, in denen Timer gestartet werden, wenn eine Interrupt-Anforderung, die einer jeweiligen Timing-Gruppe entspricht, empfangen wurde, wobei jede Timing-Gruppe mit Interrupts assoziiert ist, die innerhalb eines mit der Timing-Gruppe assoziierten Zeitfensters auftreten, wobei ein Timer einer jeweiligen Timing-Gruppe gestartet wird, wenn eine Interrupt-Anforderung, die der Timing-Gruppe entspricht, empfangen wird, wobei der Timer auf das Zeitfenster gesetzt wird und wobei die entsprechenden Interrupts an jeweilige Endpunkte übertragen werden, wenn der Timer das Zeitfenster erreicht hat.

9. Verfahren nach Anspruch 8, das Folgendes umfasst:
Abarbeiten des Interrupts; und
zumindest teilweise basierend auf dem Abarbeiten der Interrupt-Anforderung, Löschen der Interrupt-Anforderung.

10. Verfahren nach Anspruch 9, das Folgendes umfasst:
Bestimmen, dass alle gehaltenen Interrupts für die externe Ereignisgruppe gelöscht wurden; und
zumindest teilweise basierend darauf, dass alle gehaltenen Interrupts für die externe Ereignisgruppe gelöscht wurden, Erzeugen eines Detektionsneustartsignals.

## Revendications

1. Système (295) comprenant :
un contrôleur d'interruptions (296) comprenant :
des bornes d'entrée configurées pour recevoir des demandes d'interruption (300) ;
des bornes de sortie configurées pour transmettre des interruptions sur la base de la demande d'interruption (300) respective ;
une circuiterie de détection (502) configurée pour détecter si des demandes d'interruption (300) d'un groupe d'événements externes ont été reçues et si un événement externe s'est produit, ledit événement externe étant associé au groupe d'événements externes des interruptions ; et
une circuiterie de mise en attente (503) configurée pour mettre en attente la libération des interruptions du groupe d'événements externes et pour libérer les interruptions mises en attente dès réception de l'événement externe au niveau du contrôleur d'interruptions ;
**caractérisé en ce que** les interruptions sont organisées en groupes temporels dans lesquels des temporisateurs sont lancés lorsqu'une demande d'interruption correspondant à un groupe temporel respectif a été reçue, chaque groupe temporel étant associé à des interruptions qui se produisent au sein d'une fenêtre de temps associée au groupe temporel, un temporisateur d'un groupe temporel respectif étant lancé lorsqu'une demande d'interruption correspondant au groupe temporel est reçue, ledit temporisateur étant fixé à la fenêtre de temps, et les interruptions correspondantes étant transmises à des points d'extrémité respectifs lorsque le temporisateur a atteint la durée de la fenêtre de temps.

2. Système (295) selon la revendication 1, dans lequel les bornes d'entrée sont configurées pour recevoir les demandes d'interruption (300) depuis des dispositifs périphériques (299), et les bornes de sortie sont configurées pour transmettre les interruptions à un ou plusieurs points d'extrémité.

3. Système (295) selon la revendication 1, dans lequel le contrôleur d'interruptions (296) est configuré pour transmettre les interruptions à des points d'extrémité processeur configurés pour traiter des informations, à des points d'extrémité de stockage configurés pour stocker des informations, ou à des points d'extrémité radio utilisés pour transmettre ou recevoir des informations.

4. Système (295) selon l'une quelconque des revendications précédentes, dans lequel le contrôleur d'interruptions (296) est configuré pour recevoir un signal de désactivation basé sur des valeurs dans un registre utilisé pour suivre quelles interruptions sont associées au groupe d'événements externes, le signal de désactivation faisant en sorte que l'interruption respective évite une mise en attente dans la circuiterie de mise en attente, indépendamment du fait que l'événement externe ait été reçu.

5. Système selon la revendication 4, dans lequel l'interruption respective est une interruption vidéo, graphique ou d'affichage.

6. Système (295) selon la revendication 1, dans lequel la circuiterie de détection (502) est configurée pour générer un signal de redémarrage de détection une fois que toutes les demandes d'interruption (300) mises en attente ont été traitées.

7. Système (295) selon la revendication 6, dans lequel la circuiterie de détection (502) est configurée pour réinitialiser le circuit de déclenchement de libération afin de réinitialiser le regroupement des interruptions dans le groupe d'événements externes sur la base au moins en partie du signal de redémarrage de détection jusqu'à ce qu'un événement externe ultérieur se produise tout en mettant en attente une demande d'interruption reçue ultérieurement pour le groupe d'événements externes.

8. Procédé comprenant :
la réception d'une demande d'interruption (300) au niveau d'un contrôleur d'interruptions (296), la demande d'interruption (300) sollicitant la transmission d'une interruption à un point d'extrémité ;
la détermination que l'interruption est associée à un groupe d'événements externes ;
la mise en attente de la transmission de l'interruption jusqu'à ce qu'un événement externe ait été reçu par le contrôleur d'interruptions (296) ;
après la mise en attente de la transmission de l'interruption, la détermination que l'événement externe a été reçu par le contrôleur d'interruptions (296) ; et
sur la base de la détermination que l'événement externe a été reçu après la mise en attente de la transmission de l'interruption, la transmission de toutes les interruptions mises en attente pour le groupe d'événements externes depuis le contrôleur d'interruptions (296) ;
**caractérisé en ce que** les interruptions sont organisées en groupes temporels dans lesquels des temporisateurs sont lancés lorsqu'une demande d'interruption correspondant à un groupe temporel respectif a été reçue, chaque groupe temporel étant associé à des interruptions qui se produisent au sein d'une fenêtre de temps associée au groupe temporel, un temporisateur d'un groupe temporel respectif étant lancé lorsqu'une demande d'interruption correspondant au groupe temporel est reçue, ledit temporisateur étant fixé à la fenêtre de temps, et les interruptions correspondantes étant transmises à des points d'extrémité respectifs lorsque le temporisateur a atteint la durée de la fenêtre de temps.

9. Procédé selon la revendication 8, comprenant :
le traitement de l'interruption ; et
sur la base au moins en partie du traitement de la demande d'interruption, l'acquittement de la demande d'interruption.

10. Procédé selon la revendication 9, comprenant :
la détermination que toutes les interruptions mises en attente pour le groupe d'événements externes ont été acquittées ; et
sur la base au moins en partie de l'acquittement de toutes les interruptions mises en attente pour le groupe d'événements externes, la génération d'un signal de redémarrage de détection.
